# NEW EUROPEAN PATENT SPECIFICATION

(11) **EP 0 759 703 B2**
(45) Date of publication and mention of the opposition decision: **01.12.2010**
(45) Mention of the grant of the patent: 03.09.2003
(21) Application number: 95914027.8
(22) Date of filing: 13.03.1995
(51) Int. Cl.: A23G 4/00

(54) **CONTINUOUS CHEWING GUM BASE MANUFACTURING PROCESS USING POLYVINYL ACETATE AND THE REMOVAL OF VOLATILES**
VERFAHREN ZUR KONTINUIERLICHEN HERSTELLUNG VON KAUGUMMIGRUNDMASSE UNTER VERWENDUNG VON POLYVINYLACETAT UND UNTER ENTFERNUNG DER FLÜCHTIGEN STOFFE
PROCEDE DE FABRICATION EN CONTINU DE BASE DE GOMME A MACHER AU MOYEN DE L'ACETATE DE POLYVINYLE ET DE L'ELIMINATION DES CORPS VOLATILS

(43) Date of publication of application: 05.03.1997
(73) Proprietor: WM. WRIGLEY JR. COMPANY, Chicago, Illinois 60611 (US)
(72) Inventor: SONG, Joo H., Northbrook, IL 60062 (US); TOWNSEND, Donald J., Chicago, IL 60614 (US)
(74) Representative: Hayes, Adrian Chetwynd
(86) International application number: PCT/US1995/003163
(87) International publication number: WO 1996/028042

(56) References cited:
- US-A- 4 187 320
- US-A- 5 045 325
- US-A- 5 135 760
- US-A- 5 397 580
- US-A- 5 419 919
- BUSS KNEADING EXTRUDER TECHNOLOGY, Buss (America) Inc., Circa 1989.
- TRANSACTIONS OF THE FARADY SOCIETY vol. 48, 1952, pages 379 - 382
- 'Twin screw extruder in confectionery' CONFECTIONARY PRODUCTION September 1994, pages 641 - 642

## Description

### CROSS REFERENCE TO RELATED APPLICATIONS

The present application is a continuation-in-part of the following U.S. Patent Applications:
1) Serial No. 08/126,319, filed September 24, 1993, now entitled "Continuous Chewing Gum Base Manufacturing Process Using Highly Distributive Mixing"; 2) Serial No. 08/136,589, filed October 14, 1993, now entitled "Continuous Chewing Gum Base Manufacturing Process Using A Mixing Restriction Element", which is a continuation-in-part of Serial No. 08/126,319; 3) Serial No. 08/141,281, filed October 22, 1993, entitled "Continuous Gum Base Manufacturing Using Paddle Mixing"; 4) Serial No. 08/141,399, filed October 22, 1993, entitled "Continuous Chewing Gum Manufacture Using Sequential Mixers"; and 5) Serial No. 08/362,254, filed December 22, 1994, entitled "Total Chewing Gum Manufacture Using High Efficiency Continuous Mixing", which is a continuation-in-part of Serial No. 08/305,363, filed September 13, 1994, also entitled "Total Chewing Gum Manufacturing Using High Efficiency Continuous Mixing".

### FIELD OF THE INVENTION

This invention is directed to a continuous process for the manufacture of chewing gum bases.

### BACKGROUND OF THE INVENTION

A typical chewing gum base includes one or more elastomers, one or more fillers, one or more elastomer solvents, softening agents and optional plastic polymers and miscellaneous colors, flavors and antioxidants. Due primarily to the difficulty in melting and dispersing the elastomers homogeneously among the other gum base ingredients, gum base manufacture has typically been a tedious and time-consuming batch process. For example, one such conventional process uses a sigma blade batch mixer having a front to rear blade speed ratio of 2:1, and a mixing temperature of about 80-125°C.

In this conventional process, initial portions of elastomer, elastomer solvent and filler are added to the heated sigma blade mixer and blended until the elastomer is melted or smeared and thoroughly mixed with the elastomer solvent and fillers. Then the remaining portions of elastomer, elastomer solvent, softening agents, fillers and other ingredients are added sequentially, in a stepwise fashion, often with sufficient time for each stepwise addition to become completely mixed before adding more ingredients. Depending on the composition of the particular chewing gum bases and, in particular, the amount and type of elastomer, considerable patience may be required to insure that each ingredient becomes thoroughly mixed. Overall, anywhere from one to four hours of mixing time can be required to make one batch of chewing gum base using a conventional sigma blade mixer.

After mixing, the molten gum base batch must be emptied from the mixer into coated or lined pans, or pumped to other equipments such as a holding tank or a filtering device, then extruded or cast into shapes, and allowed to cool and solidify, before being ready for use in chewing gum. This additional processing and cooling requires even more time.

Various efforts have been undertaken to try to simplify and reduce the time required for gum base manufacture. European Patent Publication No. 0 273 809, in the name of General Foods France, discloses a process for making nonadhesive chewing gum base by blending elastomer and filler components together in an industrial mill type mixer to form a nonadhesive premix, dividing the premix into fragments, and blending the premix fragments and at least one other nonadhesive gum base component together in a powder mixer. Alternatively, the premix fragments and other base components can be added to an extruder along with other chewing gum components to accomplish direct manufacture of chewing gum.

French Patent Publication No. 2 635 441, also in the name of General Foods France, discloses a process for making a gum base concentrate using a twin screw extruder. The concentrate is prepared by mixing high molecular weight elastomers and plasticizers in desired proportions and feeding them into the extruder. Mineral fillers are added to the extruder downstream of the feed inlet of the elastomer/plasticizer blend. The resulting gum base concentrate has a high level of elastomers. The concentrate can then be mixed with the other gum base ingredients to provide a complete gum base.

U.S. Patent No. 3,995,064, issued to Ehrgott et al., discloses the continuous manufacture of gum base using a sequence of mixers or a single variable mixer.

U.S. Patent No. 4,187,320, issued to Koch et al., discloses a two stage process for preparing a chewing gum base. In the first stage, a solid elastomer, an elastomer solvent, and an oleaginous plasticizer are combined and mixed together under high shear. In the second stage, a hydrophobic plasticizer, a non-toxic vinyl polymer, and an emulsifier are added to the mixture and mixed using high shear.

U.S. Patent No. 4,305,962, issued to Del Angel, discloses an elastomer/resin masterbatch formed by mixing a finely ground ester gum resin with a latex elastomer to form an emulsion, coagulating the emulsion using sodium chloride and sulfuric acid, separating the coagulated solid crumbs from the liquid phase, washing the solid crumbs, and removing the excess water.

U.S. Patent No. 4,459,311, issued to DeTora et al., discloses making gum base using two separate mixers - a high intensity mixer for pre-plasticizing the elastomer in the presence of a filler, followed by a medium intensity mixer for ultimately blending all the gum base components together.

U.S. Patent No. 4,968,511, issued to D'Amelia et al., discloses that chewing gum can be made directly in a one-step compounding process (without making an intermediate gum base) if certain vinyl polymers are used as the elastomer portion.

Several publications disclose that a continuous extruder can be used to make the ultimate chewing gum product after a separate process has previously been used to make the chewing gum base. These publications include U.S. Patent No. 5,135,760, issued to Degady et al.; U.S. Patent No. 5,045,325, issued to Lesko et al., and U.S. Patent No. 4,555,407, issued to Kramer et al.

Notwithstanding the prior efforts described above, there is a need and desire in the chewing gum industry for a continuous process which can effectively and efficiently be used to make a variety of complete chewing gum bases without limiting the type or quantity of elastomer employed, and without requiring preblending or other pretreatment of the elastomer.

Continuous gum base manufacturing processes, while desirable, present a number of difficulties. One of these is that typical continuous processing equipment uses high pressures. As such, the equipment is sealed. Volatile components that may have previously escaped from an open mixer are trapped in sealed, continuous mixers. Unwanted degradation products, particularly from gum bases made with polyvinyl acetate, are trapped in the mixer, and incorporated in the gum base.

### SUMMARY OF THE INVENTION

It has been discovered that if open vents are located downstream of where polyvinyl acetate is mixed into the gum base, and no gum base ingredients that absorb acetic acid are added at those vents, or if a vacuum is applied thereto, polyvinyl acetate degradation products are removed from the mixer and not incorporated in the gum base.

The invention is a process for continuously producing a chewing gum base comprising the steps of continuously adding chewing gum base ingredients, including a hard elastomer, filler and one or more lubricating agents comprising polyvinyl acetate, into a continuous mixer comprising one or more feed inlets and vents, the polyvinyl acetate being added at one or more PVAC feed inlets; venting acetic acid volatiles from the mixer at one or more vents downstream of the one or more PVAC feed inlets, the one or more vents not serving as a feed inlet for any chewing gum base ingredients that appreciably absorb acetic acid; subjecting the chewing gum base ingredients to continuous mixing operations within the mixer, thereby producing a chewing gum base; and continuously discharging the chewing gum base from the mixer while chewing gum base ingredients continue to be introduced and mixed within the mixer; wherein the polyvinyl acetate degrades to give off said acetic acid when heated to 121-149°C (250-300°F).

The invention has numerous advantages. First, chewing gum base is produced in a continuous process without incorporating degradation components into the gum base. Second, the invention is effective for a wide range of gum base compositions. Third, high quality gum bases, including those containing polyvinyl acetate but without acetic acid off-notes, can be made on a continuous basis.

The foregoing and other features and advantages of the invention will become further apparent from the following detailed description of the presently preferred embodiments, read in conjunction with the accompanying examples and drawings.

### BRIEF DESCRIPTION OF THE DRAWINGS

FIG. 1 depicts a schematic representation of a twin screw extruder set up for use in practicing the present invention.
FIG. 2 depicts a set of shearing disks used in the extruder of FIG. 1.
FIG. 3 depicts a set of toothed elements used in the extruder of FIG. 1.
FIG. 4 depicts a set of kneading disks used in the extruder of FIG. 1.
FIG. 5 depicts a plurality of kneading disks, set up in a helical fashion, to form kneading blocks.
FIGS. 6a-e depict schematic sequential representations of gum base ingredients during the mixing process.
FIG. 7 is a perspective view of a single flat mixing paddle as used in practicing another embodiment of the invention.
FIG. 8 is a side view of the mixing paddle of FIG. 1.
FIG. 9a is a front view of the mixing paddle of FIG. 7, shown at zero degrees rotation (referred to as the no. 1 position).
FIG. 9b is a front view of the mixing paddle of FIG. 7, shown at 45 degrees counter-clockwise rotation (referred to as the no. 2 position).
FIG. 9c is a front view of the mixing paddle of FIG. 7, shown at 90 degrees counter-clockwise rotation (referred to as the no. 3 position).
FIG. 9d is a front view of the mixing paddle of FIG. 1, shown at 135 degrees counter-clockwise rotation (referred to as the no. 4 position).
FIG. 10a is a perspective view of a feeding element (not a paddle element) used in the feed areas of a paddle mixer.
FIG. 10b is a front view of the feed element of FIG. 10a.
FIG. 11a is a perspective view of a forward helical mixing paddle which can be used in a paddle mixer.
FIG. 11b is a front view of the forward helical mixing paddle of FIG. 11a.
FIG. 11c is based on a top view of the forward helical mixing paddle of 11a, showing only the top intersection line 92 superimposed over the bottom intersection line 90, and a reference line 91.
FIG. 12a is a perspective view of a reverse helical mixing paddle which can be used in a paddle mixer.
FIG. 12b is a front view of the reverse helical mixing paddle of FIG. 12a.
FIG. 12c is based on a top view of the reverse helical mixing paddle of FIG. 12a, showing only the top intersection line 92 superimposed over the bottom intersection line 90, and a reference line 91.
FIG. 13 is a perspective view of an overall paddle mixing configuration of a paddle mixer.
FIG. 14 is a schematic illustration of a barrel and feeder arrangement which can be used in conjunction with the paddle mixer configuration shown in FIG. 13.
FIG. 15 is a cross-sectional view taken along line 15-15 of FIG. 14, showing the relationship between the rotating paddles and the barrel wall.
FIG. 16 is a schematic illustration of two paddle mixers arranged in series.
FIG. 17 is a partial exploded perspective view of a Buss high efficiency, blade-and-pin mixer used to practice another embodiment of the invention, illustrating a mixing barrel and mixing screw arrangement.
FIG. 18a is a perspective view of an on-screw element used on the upstream side of a restriction ring assembly in the high efficiency mixer of FIG. 17.
FIG. 18b is a perspective view of an on-screw element used on the downstream side of the restriction ring assembly in the high efficiency mixer of FIG. 17.
FIG. 18c is a perspective view of a restriction ring assembly used in the high efficiency mixer of FIG. 17.
FIG. 19 is a perspective view showing the relative positioning of the elements of FIGS. 18a, 18b and 18c in the high efficiency mixer of FIG. 17.
FIG. 20 is a perspective view of a low-shear mixing screw element used in the high efficiency mixer of FIG. 17.
FIG. 21 is a perspective view of a high-shear mixing screw element used in the high efficiency mixer of FIG. 17.
FIG. 22 is a perspective view of a barrel pin element used in the high efficiency mixer of FIG. 17.
FIG. 23 is a schematic diagram of an arrangement of mixing barrel pins and ingredient feed ports used with the high efficiency mixer of FIG. 17.
FIG. 24 is a schematic diagram of a presently preferred mixing screw configuration used with the high efficiency mixer of FIG. 17.

### DETAILED DESCRIPTION OF THE DRAWINGS AND PREFERRED EMBODIMENTS OF THE INVENTION

Various grades of polyvinyl acetate are available from various suppliers. Polyvinyl acetate can have a low, medium or high molecular weight range. The low molecular weight range is 15,000 - 30,000 with an averege of about 25,000. Medium molecular weight range is 30,000 to 55,000 with an average of about 40,000. High molecular weight range is 55,000 to 80,000 with an average of about 65,000.

Some polyvinyl acetates apparently degrade when heated to 121-149°C (250-300°F) as they give off an acetic acid odor. Although the specification for commercial grade polyvinyl acetate is less than 0.05% free acetic acid, higher levels may result when heated. It is unclear if this acetic acid is normally present and simply released at 116°C (240° F)., the boiling point of acetic acid, or whether the polyvinyl acetate degrades at these temperatures. One low molecular weight polyvinyl acetate sample heated at 150°C (302°F) for 2 hours lost 1.7% by weight, apparently due to acetic acid loss. Thus when polyvinyl acetate is added to a continuous mixer, acetic acid volatiles can be generated. If these are not removed, they apparently become trapped in the base or absorbed by other gum base ingredients in a manner that allows their release when the gum base is being chewed. In either event, the volatiles cause poor taste quality in the base and consequently in the chewing gum.

Where a sealed continuous mixer is used that has a barrel, it is preferred that the volatiles be vented within a distance equal to four times the average barrel diameter from where the polyvinyl acetate is introduced into the mixer (referred to as a PVAC feed inlet). This venting can be accomplished by attaching a source of vacuum to the barrel downstream of the PVAC feed inlet. Venting may also occur through an open feed port, and at the end of a first mixer where the gum base is made in two continuous mixers coupled in series. When the venting occurs through an open feed port, it is also preferred that no gum base ingredients that appreciably absorb acetic acid be introduced through that feed port. For example, many fillers, calcium carbonate in particular, are known to absorb acetic acid. Therefore, if calcium carbonate is being introduced into the feed port where acetic acid volatiles are being vented, acetic acid and the volatiles will be picked up by the calcium carbonate and incorporated into the gum base. In this regard, it is preferable that all of the filler be added to the mixer prior to the polyvinyl acetate.

The chewing gum base made by the process of the present invention will be the same as bases made by conventional processes, and can thereafter be made into conventional chewing gums, including bubble gum, by conventional methods. The methods of production are well known and therefore not repeated here. Of course, specialized chewing gum, such as nonadhesive chewing gum and bubble gum, will use specialized gum base ingredients. However, those gum base ingredients can be combined using the processes herein described.

In general, a chewing gum composition typically comprises a water-soluble bulk portion, a water-insoluble chewable gum base portion and typically water-insoluble flavoring agents. The water-soluble portion dissipates with a portion of the flavoring agent over a period of time during chewing. The gum base portion is retained in the mouth throughout the chew.

The insoluble gum base generally comprises elastomers, elastomer solvents, softening agents and inorganic fillers. Plastic polymers, such as polyvinyl acetate, which behave somewhat as plasticizers, are also often included. Other plastic polymers that may be used include polyvinyl laurate, polyvinyl alcohol and polyvinyl pyrrolidone.

Elastomers may constitute 5 to 95 percent by weight of the gum base, preferably between 10 and 70 percent by weight and most preferably between 15 and 45 percent by weight. Elastomers may include polyisobutylene, butyl rubber (isobutylene-isoprene copolymer), styrene butadiene rubber, polyisoprene and butadiene rubber, as well as natural rubbers such as smoked or liquid latex and guayule, as well as natural gums such as jelutong, lechi caspi, perillo, massaranduba balata, massaranduba chocolate, nispero, rosindinha, chicle, gutta hang kang or mixtures thereof.

Elastomer used in chewing gum base can generally be categorized as hard elastomers or soft elastomers. Hard elastomers, which are most commonly butyl rubber and styrene butadiene rubber, generally have a high molecular weight, typically a Flory molecular weight over 200,000. A typical butyl rubber used in chewing gum base has a Flory molecular weight of about 400,000. Hard elastomers are those which require high shear, dispersive mixing to be utilized in chewing gum base. Hard elastomers generally do not flow at room temperature, even over an extended period of time, and are not pumpable even when heated to temperatures just below which substantial degradation occurs.

Soft elastomers have a lower molecular weight, typically a Flory molecular weight under 100,000. Polyisobutylene and polybutadiene are typically soft elastomers. A typical polyisobutylene used in chewing gum base has a Flory molecular weight of about 53,000. Soft elastomers are generally pumpable at temperatures normally used to make chewing gum base, and will flow at room temperature, though often very slowly.

In addition to Flory molecular weight, sometimes a Stodinger molecular weight is specified. Stodinger molecular weights are generally 1/3 to 1/5 of Flory molecular weights. For example, the polyisobutylene having a Flory molecular weight of 53,000 has a Stodinger molecular weight of about 12,000. Sometimes number average or weight average molecular weights are reported, or the measurement method is not reported. In such instances, the above recitation of the functionality of the elastomer and how they are mixed in producing the chewing gum base can generally be used to classify the elastomer as hard or soft.

Elastomer solvents may constitute from 0 to 75 percent by weight of the gum base, preferably 5 to 45 percent by weight and most preferably 10 to 30 percent by weight. Elastomer solvents include natural rosin esters such as glycerol ester of wood rosin, glycerol ester of partially hydrogenated rosin, glycerol ester of polymerized rosin, glycerol ester of partially dimerized rosin, glycerol ester of rosin, pentaerythritol esters of partially hydrogenated rosin, methyl and partially hydrogenated methyl esters of rosin, pentaerythritol ester of rosin, resin ester of glycerol abietate or mixtures thereof. Elastomer solvents also include synthetics such as terpene resins derived from alpha-pinene, beta-pinene and/or d-limonene.

Softening agents include oils, fats, waxes and emulsifiers. Oils and fats, sometimes referred to as plasticizers, include tallow, lard, hydrogenated and partially hydrogenated vegetable oils, such as soybean oil, cotton seed oil, palm oil, palm kernel oil, coconut oil, sunflower oil and corn oil, cocoa butter, and lipids made from triglycerides of fatty acids. Commonly employed waxes include polywax, paraffin, microcrystalline and natural waxes such as candelilla, beeswax and carnauba. Paraffin waxes may be considered to be plasticizers. Microcrystalline waxes, especially those with a high degree of crystallinity, may be considered as bodying agents or textural modifiers.

Emulsifiers, which also sometimes have plasticizing properties, include glycerol monostearate, lecithin, mono and diglycerides of fatty acids, triacetin, acetylated monoglyceride, and glycerol 'triacetate.

The gum base typically also includes a filler component. The filler component may be calcium carbonate, magnesium carbonate, talc or dicalcium phosphate. The filler may constitute between 5 and 60 percent by weight of the gum base.
Preferably, the filler constitutes 5 to 50 percent by weight of the gum base.

Further, gum bases may also contain optional ingredients such as antioxidants, colors and flavors.

The temperature attained in the mixer often varies over the length of the mixer. The peak temperature in the dispersive mixing zone where high shear mixing elements are located, will preferably be over 79°C (175°F), more preferably over 121°C (250°F) and most preferably over 149°F (300°F), and even 177°C (350°F) for some gum base manufacturing processes.

The insoluble gum base may constitute between 5 to 80 percent by weight of the gum. More typically the insoluble gum base constitutes between 10 and 50 percent by weight of the gum and most often 20 to 35 percent by weight of the gum.

The water soluble portion of the chewing gum may include softeners, bulk sweeteners, high intensity sweeteners, flavoring agents and combinations thereof. Softeners are added to the chewing gum in order to optimize the chewability and mouth feel of the gum. The softeners, which are also known as plasticizers or plasticizing agents, generally constitute between 0.5-15% by weight of the chewing gum. The softeners may include glycerin, lecithin, and combinations thereof. Aqueous sweetener solutions such as those containing sorbitol, hydrogenated starch hydrolysates, corn syrup and combinations thereof, may also be used as softeners and binding agents in chewing gum.

Bulk sweeteners constitute between 5-95% by weight of the chewing gum, more typically 20-80% by weight of the chewing gum and most commonly 30-60% by weight of the chewing gum. Bulk sweeteners may include both sugar and sugarless sweeteners and components. Sugar sweeteners may include saccharide containing components including sucrose, dextrose, maltose, dextrin, dried invert sugar, fructose, levulose, galactose and corn syrup solids, alone or in combination. Sugarless sweeteners include components with sweetening characteristics but are devoid of the commonly known sugars. Sugarless sweeteners include sugar alcohols such as sorbitol, mannitol, xylitol, hydrogenated starch hydrolysates and maltitol, alone or in combination.

High intensity sweeteners may also be present and are commonly used with sugarless sweeteners. When used, high intensity sweeteners typically constitute between 0.001-5% by weight of the chewing gum, preferably between 0.01-1% by weight of the chewing gum. Typically, high intensity sweeteners are at least 20 times sweeter than sucrose. These may include sucralose, aspartame, salts of acesulfame, alitame, saccharin and its salts, cyclamic acid and its salts, glycyrrhizin, dihydrochalcones, thaumatin and monellin, alone or in combination.

Combinations of sugar and/or sugarless sweeteners may be used in chewing gum. The sweetener may also function in the chewing gum in whole or in part as a water soluble bulking agent. Additionally, the softener may provide additional sweetness such as with aqueous sugar or alditol solutions.

Flavor should generally be present in the chewing gum in an amount within the range of 0.1-15% by weight of the chewing gum, preferably between 0.2-5% by weight of the chewing gum, most preferably between 0.5-3% by weight of the chewing gum. Flavoring agents may include essential oils, synthetic flavors or mixtures thereof including oils derived from plants and fruits such as citrus oils, fruit essences, peppermint oil, spearmint oil, other mint oils, clove oil, oil of wintergreen and anise. Artificial flavoring agents and components may also be used in the flavor ingredient of the invention. Natural and artificial flavoring agents may be combined in any sensorially acceptable fashion.

Optional ingredients such as colors, emulsifiers, pharmaceutical agents and additional flavoring agents may also be included in chewing gum.

The preferred process of the present invention may be carried out with a variety of continuous mixing equipment. In some embodiments of the invention, more than one piece of continuous mixing equipment will be coupled in series. As used in the claims, the term "a continuous mixer" means one mixer or a plurality of mixers in series. Three specific types of continuous mixing equipment are described in detail below and are shown in the attached drawings: twin screw extruders, paddle mixers and blade-and-pin mixers, which are specialized single screw extruders. Extruders are preferred for use in the present invention, particularly the blade-and-pin mixer.

### A. Twin Screw Extruders

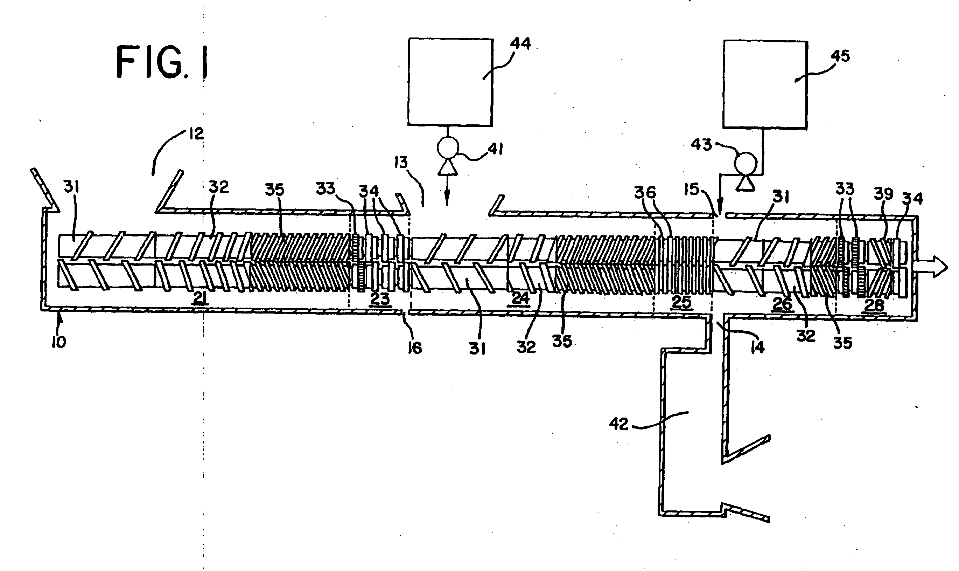

In one embodiment, the invention may be carried out on a twin screw extruder such as depicted schematically in FIG. 1. The twin screw extruder used to practice the preferred embodiment of the invention will be set up with several different feed inlet locations where chewing gum base ingredients can be added. The screws inside the barrel of the extruder are equipped with different types of elements along the length of the screws. The different mixing zones are sometimes referred to as processing zones, and described by the type of elements employed in the zones. The barrel is typically made up of different sections. These sections may be heated or cooled independent of other sections. Heating and cooling is thus typically done by region of the extruder barrel, which generally coincides with the barrel sections. These regions of heating or cooling may or may not coincide with processing zones, depending on the lengths of the barrel sections and the elements in the processing zones.

While different equipment manufacturers make different types of elements, the most common types of elements include conveying elements, compression elements, reverse conveyance elements, homogenizing elements such as shearing disks and toothed elements, and kneading disks and blocks. Conveying elements generally have flights spiraling along the elements with wide gaps between the flights. These elements are used at feed inlet zones to quickly move material into the body of the extruder. Compression elements have flights with a pitch that narrows as the material moves along the flights. This results in compression and high pressure in the forward direction, which is required to force material downstream and through the other elements. Reverse conveyance elements have flights that are angled opposite those of the conveying elements. The flights rotate in a direction that would force material upstream. These elements provide a high back pressure and slow down movement of the material through the extruder. Of course, the extruded material still works its way opposite the flights to move downstream through the reverse elements. A reverse helical arrangement of kneading blocks can accomplish a similar result.

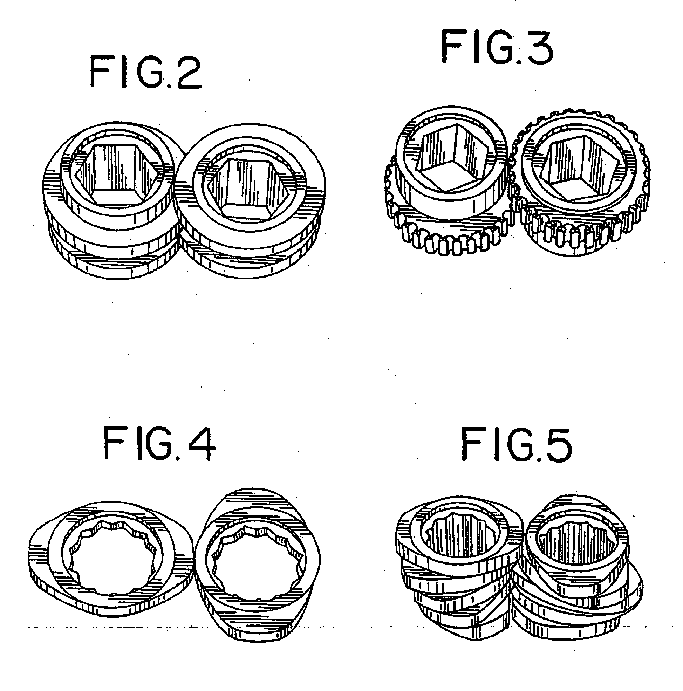

Shearing disks, as their name implies, impart high shearing forces on the material in the extruder, resulting in highly dispersive mixing. In a twin screw extruder, the shearing disks opposite one another on the two different screws have close fitting disk/slot elements, as depicted in FIG. 2. Toothed elements, as depicted in FIG. 3, have gear-like teeth that oppose a cylindrical spacer shaft on the other screw. Toothed elements impart highly distributive mixing. Often the toothed elements are made in matched sets, with a cylindrical shaft portion and a toothed portion as one unit. Kneading disks, as shown in FIG. 4, have an elliptical shape, and produce a kneading action in the material passing through the extruder. Often a plurality of kneading disks will be placed next to each other in a helical arrangement, as shown in FIG. 5, referred to as kneading blocks.

Highly distributive mixing can also be accomplished using reverse conveyance elements that have portions missing from the flights to allow flow counter to the direction of compression. These missing portions may be arranged as a groove through the flights cut parallel to the length of the element. Also, kneading blocks followed by reverse conveyance elements, to build up high back pressure, also produce highly distributive mixing.

Mixing-restriction elements produce a high back pressure and some mixing without overly restricting throughput. For this reason, nozzles or orifices are not suitable as mixing-restriction elements. As noted above, reverse conveyance elements provide back pressure, and are thus mixing-restriction elements. Shearing disks, like those shown in FIG. 2, also produce a high back pressure and are thus another example of a mixing-restriction element.

The high back pressure is important so that other elements, such as those that produce highly distributive or highly dispersive mixing, will be able to function properly. Thus in the preferred embodiment of the invention, mixing-restriction elements are used after each mixing zone. It is most preferable to use a mixing-restriction element just prior to the gum base exiting the extruder.

These various types of elements, and other elements useful in twin screw extruders, are well known in the art and are commercially available. The elements are often specifically designed for the different types of commonly available twin screw extruders, which include co-rotation, counter rotation, intermeshing and tangential twin screw extruders. Elements intended for similar functions will vary in design depending on the type of extruder for which they are intended.

One specific type of element for a specific brand of extruder is a non-intermeshing polygon element sold by the Farrel Corporation, 25 Main Street, Ansonia, Conn. 06401, for the Farrel-Rockstedt co-rotating twin screw extruder. It is believed that the non-intermeshing polygons produce dispersive mixing.

In preferred embodiments of the invention, the dispersive mixing disentangles the elastomers with a minimum amount of degradation of the polymer chains. Thus, while dispersive mixing will inevitably reduce the molecular weight of the polymer, it is preferable to control the dispersive mixing operation to minimize this molecular weight reduction. Preferably, the average molecular weight will not be reduced below the average molecular weight of the same polymers mixed into gum base using conventional processes.

An adequate dispersive mixing will produce a smooth, rubbery fluid, with no detectable lumps of rubber. If only a few lumps of rubber are present they may be screened out or dispersed during subsequent mixing steps. However, if the number or size of lumps is excessive, or the processed elastomers and fillers are in the form of an agglomeration or grainy mass, the dispersive mixing applied is inadequate.

The distributive mixing should be sufficient to produce a homogeneous gum base, rather than a material that appears to be "sweating", or that has a marbled or swiss cheese texture. In the preferred embodiment of the invention, the highly distributive mixing is sufficient to incorporate softening agents, particularly fats, oils and waxes, to the same degree these softening agents are incorporated in conventional chewing gum base manufacturing processes.

As shown in FIG. 1, for practicing an embodiment of the invention, a twin screw extruder 10 is set up with a first feed inlet location 12 adjacent a first processing zone 21 fitted with conveying elements 31, conveying and compression elements 32 and compression elements 35. The second processing zone 23 is equipped with a combination of toothed elements 33, as depicted in FIG. 3, and several sets of shearing disks 34, as depicted in FIG. 2. At the end of the second processing zone 23 the extruder 10 is equipped with a port 16 which is connected to a vacuum source (not shown). The third processing zone 24 contains additional conveying elements 31, conveying and compression elements 32 and compression elements 35. A second feed inlet 13 is provided in the extruder adjacent this second set of conveying elements 31, for feeding additional gum base ingredients into the third processing zone 24. Feed inlet 13 allows for the addition of powdered ingredients as well as liquid ingredients from pump 41. The fourth processing zone 25 is fitted with kneading disks 36. At the beginning of the fifth processing zone 26, the twin screw extruder 10 has another inlet 15 connected to a pump 43 and a feed inlet 14 in the form of a port connected to a side feeder 42, which may be a single or twin screw extruder, or even a gear pump which can generate high pressure. The fifth processing zone 26 is fitted with conveying elements 31, conveying and compression elements 32 and compression elements 35, which force the gum base ingredients into the sixth and final processing zone 28. Zone 28 contains two sets of toothed elements 33, followed by reverse elements 39 and shearing disks 34. After passing through the shearing disks 34, the gum base ingredients exit the extruder 10.

It may be preferable to heat some of the ingredients, either to melt them or to lower their viscosity. As shown in FIG. 1, the extruder 10 may be set up with heated tanks 44 and 45, connected respectively to pumps 41 and 43, for this purpose. Other commonly used equipment, such as equipment to monitor the temperature and heat or cool the extruder, is not shown in FIG. 1. The equipment will also include conventional weighing and feeding devices for continuously adding granulated or powdered ingredients. All of the ingredients are preferably fed into the extruder by equipment that is controlled to operate at a steady state; although during startup it may be preferable to start feeding some ingredients before others, and to feed the ingredients in at different rates than those desired for steady-state operation.

It will be understood that FIG. 1, as a schematic representation, shows the various components in their respective order from the standpoint of flow through the extruder 10. Typically the screws are mounted in a horizontal side-to-side position and feed inlets, especially those open to the atmosphere like the inlet 12 and 13, are placed vertically above the screws.

While the arrangement of FIG. 1 is preferred for particular gum bases, other arrangements may be preferred for other gum bases. FIG. 1 depicts an extruder with three general areas of ingredient addition and six processing zones. For some gum bases, two, four or more ingredient feeding zones may be used, with different numbers of processing zones. FIG. 1 also depicts the use of one set each of long conveying elements 31, conveying and compression elements 32 and compression elements 35 in the first processing zone 21, a short set of conveying and compression elements 32 in zones 24 and 26, and a short set of conveying elements 31 and compression elements 35 in zone 26. In reality, one, two or more elements of different types and length may be used in these zones. FIG. 1 also depicts one set of toothed elements 33 and three sets of shearing disks 34 in zone 23, but different numbers of these elements, or different elements all together, may be used. Likewise in zones 25 and 28, different types of elements that produce distributive mixing may be used, dependent on the gum ingredients being mixed in those zones and the type of extruder being used.

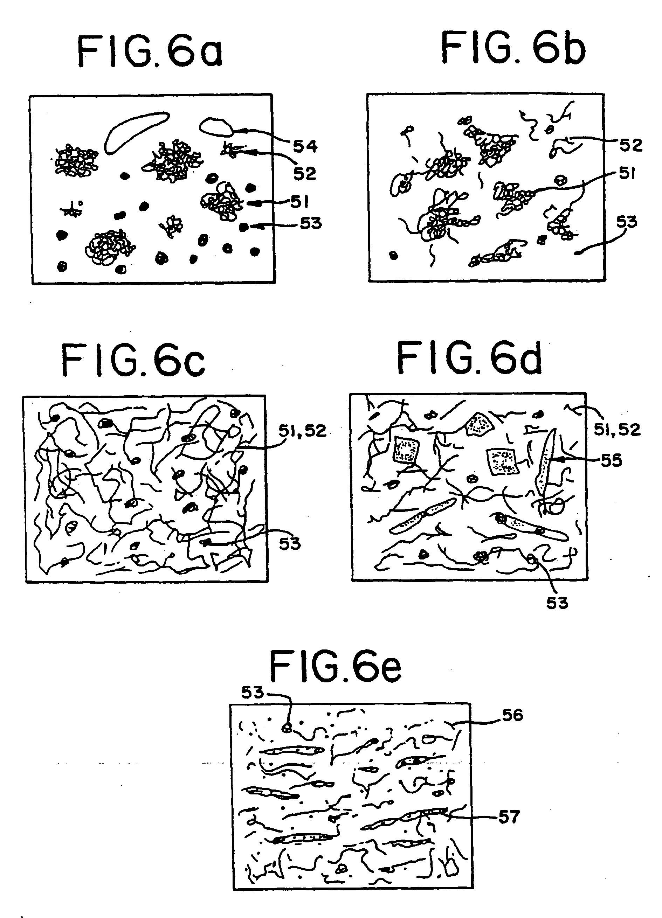

FIGS. 6a-e represent the state of various gum base ingredients as they are compounded into chewing gum base. At the beginning, as shown in FIG. 6a, the high molecular weight (hard) elastomer 51 and medium molecular weight elastomer 52 are both in the form of granules or particles in which the elastomer molecules are tightly bound together. The filler 53 is in particulate form, but may not be homogeneously mixed with the elastomers 51 and 52. The elastomer solvent 54 may be present in the form of droplets. As mixing begins, depicted in FIG. 6b, the elastomer solvent 54 becomes associated with the elastomers 51 and 52. With the presence of the filler 53, elastomer solvent 54 and heat, the granules begin to come apart into individual elastomer molecules. Also, the filler 53 becomes more evenly distributed, and may have its particle size reduced. As the process continues, the elastomers 51 and 52 become disentangled, as shown in FIG. 6c. This disentangling is the result of subjecting the elastomers 51 and 52 to highly dispersive mixing.

After this step, the lower viscosity ingredients, such as polyvinyl acetate 55, may be added, as shown in FIG. 6d. Initially, this material will also be in discrete particles, or droplets as it melts. Further mixing and further ingredient additions, such as waxes 56 and emulsifiers 57, are subjected to distributive mixing, as depicted in FIG. 6e. Continued highly distributive mixing produces a homogeneous chewing gum base, wherein discrete particles or droplets are not detectible by sensory perception.

The elastomer may be added at the first feed inlet 12 along with elastomer solvent such as resins and the filler. However, especially lower weight elastomers may be added at least partially at the second feed inlet 13. Portions of the filler may also be added at the second feed inlet 13. Polyvinyl acetate may be added via a powder feeder or the single screw extruder 42, or a twin screw extruder or gear pump, at the feed inlet port 14, while melted fats and waxes and oils are added at the last feed inlet 15. This will result in the filler, elastomer and some lubricating agents being subjected to highly dispersive mixing first before lower viscosity ingredients are added. The toothed elements 38, reverse elements 39 and shearing disk 40 after feed inlet 15 result in highly distributive mixing of all of the low viscosity gum base ingredients with the other gum base ingredients.

A preferred small scale extruder is a model LSM 30.34 counter-rotational, intermeshing and tangential twin screw extruder from Leistritz, Nürerberg, Germany. Other acceptable twin screw extruders include the Japan Steel Works Model TEX30HSS32.5PW-2V intermeshing co- and counter-rotating twin screw extruder, also known as the Davis Standard D-Tex Model, distributed by Crompton & Knowles Corporation, #1 Extrusion Dr., Pawcatuck, CT 06379, and either the co-rotating or counter-rotating intermeshing twin screw extruders from Werner & Pfleiderer Corporation, 663 E. Crescent Ave., Ramsey N.J. 07446. It is preferred to have a long barrel length. A Werner & Pfleiderer co-rotational twin screw extruder can go up to a length to diameter (L/D) ratio of 48. The Japan Steel Works Model TEX30HSS32.5PW-2V extruder may be equipped to have an L/D of 58.

### B. Paddle Mixers

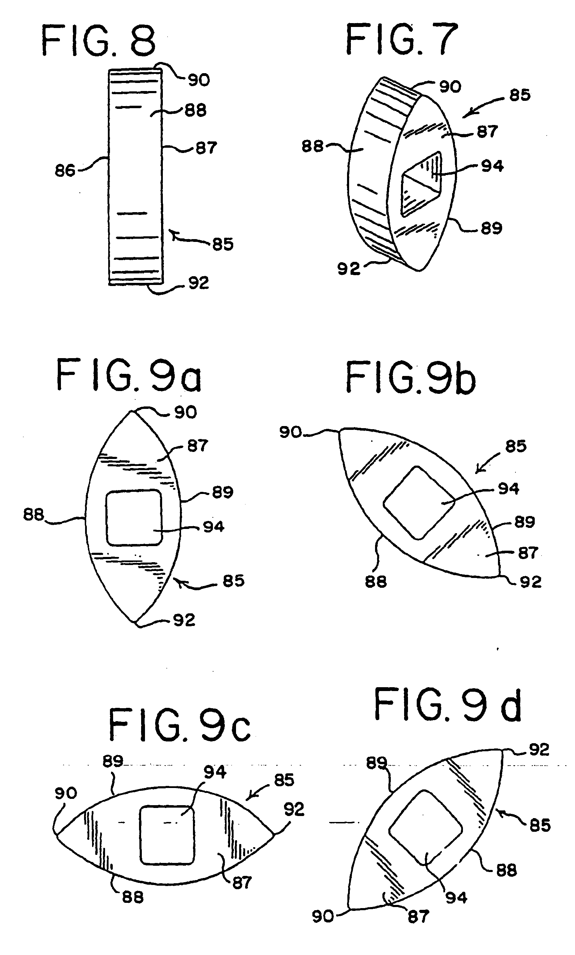

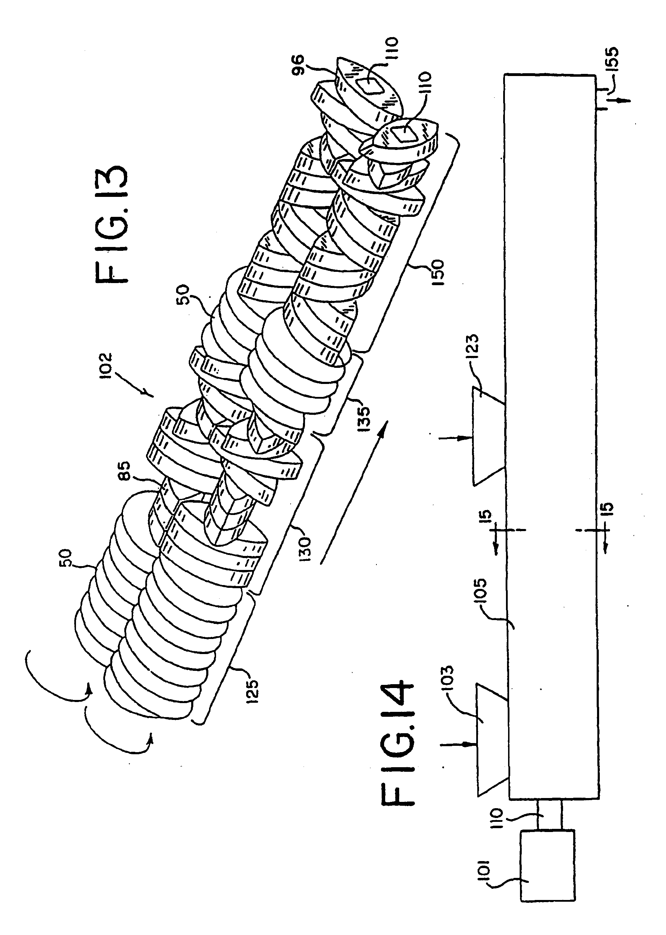

Another type of continuous mixer that may be used to practice the present invention is a paddle mixer. A mixing paddle 85 having a flat (non-helïcal) configuration is shown in FIGS. 7-9. The term "mixing paddle" is defined herein as a four-sided mixing element having two flat surfaces 86 and 87, and two concave surfaces 88 and 89. The flat surfaces are parallel to each other and intersect only the concave surfaces. The concave surfaces oppose each other and intersect each other at two lines 90 and 91. A non-circular (preferably square) opening 94 passes through the center of each mixing paddle 85, in a direction perpendicular to the flat surfaces 86 and 87, and intersects both flat surfaces. The openings 94 are used for mounting a plurality of paddles on rotating shafts, in a predetermined sequence (FIG. 13).

Referring to FIGS. 9a-d, the mixing paddles 85 can be positioned on a shaft at the same or different rotational angles relative to each other. For purposes of the following description, the "No. 1 position" is defined pursuant to FIG. 9a, wherein a straight line drawn on the flat surface 87 and intersecting the lines 90 and 92 coincides with a reference line (for example, a vertical line). The "No. 2 position" is defined pursuant to FIG. 9b, wherein a straight line drawn on the flat surface 87 and intersecting the lines 90 and 92 is 45 degrees counter-clockwise from the reference line. The "No. 3 position" is defined pursuant to FIG. 9c, wherein a straight line drawn on the flat surface 87 and intersecting the lines 90 and 92 is 90 degrees counter-clockwise from the reference line. The "No. 4 position" is defined pursuant to FIG. 9d, wherein a straight line drawn on the flat surface 87 and intersecting the lines 90 and 92 is 135 degrees counter-clockwise from the reference line.

Because the paddles 85 in FIGS. 9a-d are symmetrical, there is no need to further define the relative rotational positions of the paddles for angles of 180, 225, 270 and 315 degrees from the reference line. For example, a paddle having a rotational position of 180 degrees coincides exactly with a paddle having a rotational angle of zero (FIG. 9a). Similarly, a paddle having a rotational angle of 225 degrees coincides exactly with a paddle having a rotation angle of 45 degrees (FIG. 9b); a paddle having a rotational angle of 270 degrees coincides exactly with a paddle having a rotational angle of 90 degrees (FIG. 9c), and a paddle having a rotational angle of 315 degrees coincides exactly with a paddle having a rotational angle of 135 degrees (FIG. 9d).

It is also understood that each mixing paddle 85 will be in constant rotation during operation of the paddle mixer, due to the rotation of the shafts supporting the paddles (FIG. 13). For purposes of describing the mixing paddles in terms of relative rotational positions (i.e. relative to each other) as explained above, the reference line should be deemed to rotate as the paddles rotate. For example, if the mixing paddles shown in FIGS. 9a-d are positioned sequentially on a single shaft, and if the shaft is rotated 90 degrees, then the chosen reference line, initially vertical, would rotate to a horizontal position. In other words, the relative rotational positions of the mixing paddles in FIGS. 9a-d, defined respectively as 1-2-3-4, will not change during operation of the paddle mixer.

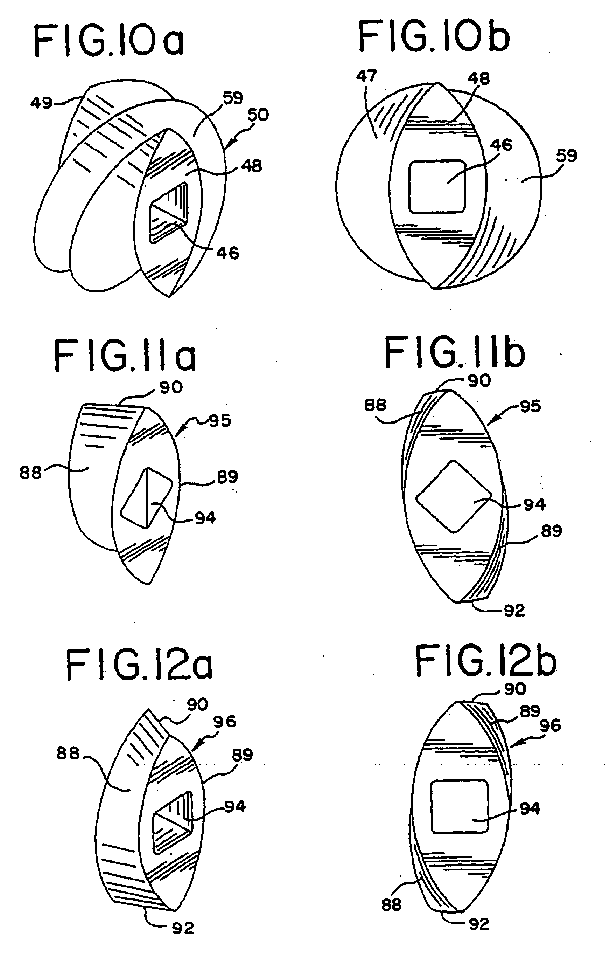

Referring to FIGS. 10a and 10b, the method of the invention also provides for the use of a minor portion of non-paddle elements known as forward conveying or feed elements 50. Each feed element 50 has a flat front surface 48, a flat back surface 49 parallel to the front surface, and a non-circular (preferably square) opening 46 perpendicular to and intersecting the front and back surfaces. However, unlike the mixing paddles described above, the feed elements do not have two concave surfaces intersecting at two lines. Instead, each feed element 50 includes portions of two alternating helical channels 47 and 59. The helical channels are more apparent in FIG. 13 wherein a plurality of feed elements 50 are combined in sequence on the rotating shafts 110 to form feed zones in the mixer. The primary purpose of the feed elements 50 is to convey chewing gum base ingredients forward to the regions of the mixer where paddle mixing takes place.

Referring to FIGS. 11a and 11b, a type of mixing paddle known as a forward helical paddle 95 can also be used with the method of the invention. When used, the forward helical paddle 95 imparts a slight forward conveying action while mixing the gum base ingredients. Like the flat mixing paddles 85, each forward helical paddle 95 has two flat surfaces and two concave surfaces 88 and 89. The flat surfaces are parallel to each other and intersect only the concave surfaces. The concave surfaces oppose each other and intersect at two lines 90 and 92. Again, a non-circular (preferably square) opening 94 passes through the center of each mixing paddle 95 and intersects both flat surfaces.

The difference between the forward helical paddle 95 and the flat mixing paddle 85 is that, in the flat mixing paddle 85, the lines 90 and 92 (defining the intersections of concave surfaces 88 and 89) are parallel to each other as shown in FIG. 8. In the forward helical paddle, the line 90 has been rotated counter-clockwise with respect to the line 92 so that the lines are no longer parallel, as shown in FIG. 11b. Similarly, the line 92 has been rotated clockwise with respect to the line 90. The effect of this rotation is to bend the concave surfaces 88 and 89 so that these surfaces have a mildly helical configuration.

Referring to FIGS. 12a and 12b, a type of mixing paddle known as a reverse helical paddle 96 can also be used with the method of the invention. When used, the reverse helical paddle 96 imparts a slight resistance to forward conveying of the gum base ingredients while mixing the ingredients. This causes a locally higher degree of mixer fill and slight elevation in pressure, in the vicinity of the reverse helical paddle 96.

The reverse helical paddle 96 is configured in the same fashion as the forward helical pattern 95 discussed above, except that the lines 90 and 92 (defining the intersections of concave surfaces 88 and 89) are rotated in the opposite directions. Referring to FIG. 12a, the line 90 has been rotated clockwise with respect to the line 92, and the line 92 has been rotated counter-clockwise with respect to the line 90. The effect of this rotation is to bend the concave surfaces 88 and 89 so that these surfaces have a mild reverse helical configuration.

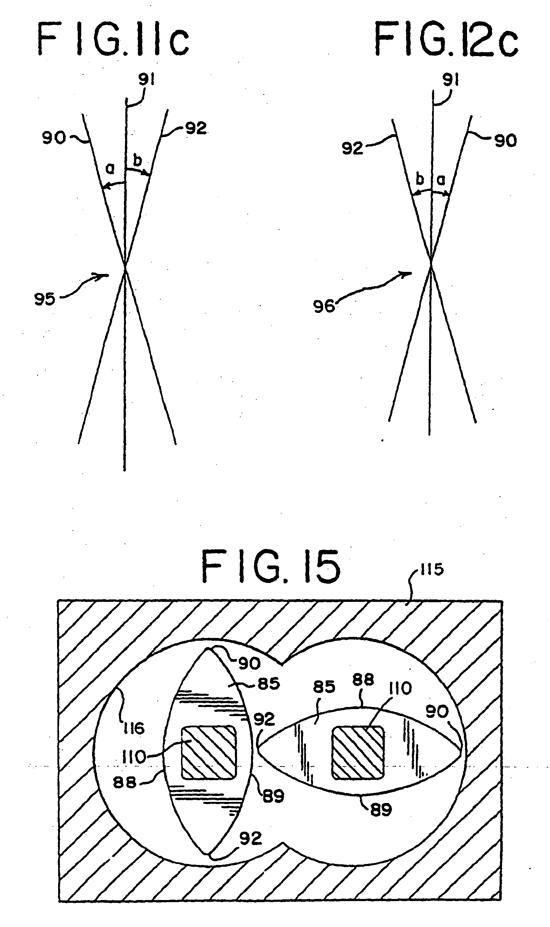

The degree of rotation of lines 90 and 92 for the forward and reverse helical paddles 95 and 96 can be explained with reference to FIGS. 11c and 12c. In FIGS. 11c and 12c, the helical paddles have been viewed from above and only the lines 90 and 92 of the paddles are shown, superimposed one on top of the other. A reference line 91 is also shown, indicating the positions of lines 90 and 92 if there were no rotation, as in a flat paddle 85.

Referring to FIG. lic, the angle "a" is the amount of counter-clockwise rotation of line 90 present in a forward helical paddle 95. The angle "a" should be between 5 and 30 degrees, preferably between 10 and 18 degrees, most preferably about 13 degrees, 53 minutes, 50 seconds. The angle "b" is the amount of clockwise rotation of line 92 present in a forward helical paddle 95. The angle "b" should be between 5 and 30 degrees, preferably between 10 and 18 degrees, most preferably about 13 degrees, 53 minutes, 50 seconds.

Referring to FIG. 12c, the angle "a" is the amount of clockwise rotation of line 90 present in a reverse helical paddle 96. The angle "a" should be between 5 and 30 degrees, preferably between 10 and 18 degrees, most preferably about 13 degrees, 53 minutes, 50 seconds. The angle "b" is the amount of counter-clockwise rotation of line 92 present in a reverse helical paddle 96. The angle "b" should be between 5 and 30 degrees, preferably between 10 and 18 degrees, most preferably about 13 degrees, 53 minutes, 50 seconds.

Referring to FIG. 13, the mixing paddles and feed elements are assembled on two parallel shafts 110 in a predetermined configuration. In the embodiment shown, for a 12.7 cm (5-inch) paddle mixer, each of the shafts 110 has an active length of 91 cm (36 inches) and a square cross-sectional area of 3.493 cm x 3.493 cm (1.375 inches x 1.375 inches) 12.201 cm² (1.891 square inches)). The parallel shafts 110 are spaced apart at a distance of 8.89 cm (3.5 inches) (center to center). The shafts 110 are adapted for co-rotation (rotation in the same direction) inside a mixing barrel. Each of the shafts 110 supports an identical arrangement of mixing paddles and feed elements. The mixing paddles and feed elements on the adjacent shafts may intermesh, as shown in FIG. 13, but do not touch each other, as the shafts rotate.

Each of the shafts 110 is long enough to accommodate 91.4 cm (thirty-six inches) of elements, each having a length of 2.5 cm (1 inch), a maximum diameter of 12.38 cm (4.874 inches) and a minimum diameter of 5 cm (2 inches). Two or more 2.5 cm (1-inch) segments may be combined to make longer elements without affecting the operation. For instance, the feed elements 50 often have a length of 5 cm (2 inches). For purposes of the invention, a large portion of each shaft should be covered with mixing paddles. Generally, at least 40 percent of each shaft should be covered with mixing paddles. Preferably at least 50 percent of each shaft is covered with mixing paddles, most preferably at least 60 percent. Of the mixing paddles, a majority should be flat mixing paddles as opposed to forward helical or reverse helical paddles. In the embodiment shown in FIG. 13, 67 percent of the shaft length is covered with mixing paddles (24 2.5 cm (one-inch) elements) and 33 percent of the shaft length is covered with feed elements (6 5 cm (two-inch) elements).

The mixer configuration 102 in FIG. 13 includes two feed zones 125 and 135, and two paddle mixing zones 130 and 150. The specific mixer configuration is indicated in Table 1 below. In Table 1 and other tables, the following abbreviations are used:

| | |
|---|---|
| FC - | feed conveying element (each occupying two 2.5 cm (1-inch) positions) |
| FP - | flat mixing paddle (each occupying one 2.5 cm (1-inch) position) |
| FH - | forward helical mixing paddle (each occupying one 2.5 cm (1-inch) position) |
| RH - | reverse helical mixing paddle (each occupying one 2.5 cm (1-inch) position) |

**Table 1:**

| Mixer Configuration (Per Shaft) - FIG. 13 | | | | | |
|---|---|---|---|---|---|
| Longitudin al Position | Element | Rotational Position | Longitudinal Position | Element | Rotational Position |
| 1 | FC | 4 | 19 | FP | 3 |
| 2 | FC | 4 | 20 | FC | 3 |
| 3 | FC | 4 | 21 | FC | 3 |
| 4 | FC | 4 | 22 | FC | 3 |
| 5 | FC | 4 | 23 | FC | 3 |
| 6 | FC | 4 | 24 | FP | 3 |
| 7 | FC | 4 | 25 | FP | 3 |
| 8 | FC | 4 | 26 | FP | 3 |
| 9 | FP | 4 | 27 | FP | 1 |
| 10 | FP | 4 | 28 | FP | 1 |
| 11 | FP | 4 | 29 | FP | 1 |
| 12 | FP | 2 | 30 | FP | 3 |
| 13 | FP | 2 | 31 | FP | 3 |
| 14 | FP | 2 | 32 | FP | 3 |
| 15 | FP | 3 | 33 | FP | 4 |
| 16 | FP | 4 | 34 | FP | 1 |
| 17 | FP | 1 | 35 | FP | 2 |
| 18 | FP | 2 | 36 | RH | 1 |

The use of two or more feed zones and two or more mixing zones in the mixer configuration 102, permits sequential addition and mixing of different gum base ingredients. For example, a high viscosity portion including elastomer, filler, and some resin or polyvinyl acetate can be continuously fed to the first feed zone 125 in FIG. 13. These ingredients can then be thoroughly mixed in the first paddle mixing zone 130 before being combined with additional ingredients. A lower viscosity portion including waxes (when used), fats, oils, colorants and additional resin or polyvinyl acetate can be continuously fed to the second feed zone 135. All gum base ingredients can then be thoroughly mixed in the second paddle mixing zone 150.

The mixer configuration 102 shown in FIG. 13 is, in practice, surrounded by one or more barrel segments extending the length of the mixer configuration 102. FIG. 14 illustrates, schematically, a typical barrel 105 surrounding the mixer configuration 102. A motor 101 drives the shafts 110 which support the mixer elements. The gum base ingredients are fed through feed ports 103 and 123 in the barrel 105. The gum base remains in the mixer for a sufficient time to ensure homogeneity, for example, a time on the order of 20-30 minutes, and exits through an exit nozzle 155. The barrel 105 may be heated or cooled. Heating may be accomplished using hot water or a steam jacket surrounding the barrel (not shown). Cooling may be accomplished'by supplying cooling water to a jacket surrounding the barrel 105. Alternative methods of heating and cooling may also be employed. Generally, heating is applied at the start up, but cooling is applied in the latter stages to prevent overheating and base degradation.

The heating and cooling of the barrel should be supplied, as necessary, to maintain the product exit temperatures at 90°C-150°C, preferably at a 100-135°C, during mixing of the gum base ingredients.

FIG. 15 is a sectional view of the barrel 105 which indicates how the paddle mixer is able to operate with longer residence times, compared to a conventional twin screw extruder. As shown in FIG. 15, the barrel wall 116 has the shape of two intersecting cylinders, each cylinder having a diameter larger than the largest diameter of the mixing paddle 85 contained therein. This barrel configuration resembles that of a standard twin screw extruder. However, unlike the screws of a twin screw extruder, the paddles 85 do not mostly fill the space defined by the barrel wall 116.

The mixing paddles 85 have a typically close tolerance with the barrel wall 116, and with each other, in the vicinity of the lines 90 and 92 where the concave surfaces intersect. For paddles 85 having a long diameter of 12.38 cm (4.874 inches), the closest tolerance between each paddle and the barrel wall 116 may be on the order of 0.121 cm (0.048 inch) to 0.198 (0.078 inch), and the closest tolerance between the two paddles may be on the order of 0.152 to 0.229 cm (0.060 inch to 0.090 inch). However, away from the lines 90 and 92, the distance between each paddle 85 and the barrel wall 116 is much greater. Due to the unique design of the paddles 85, the percentage of barrel space occupied by the paddles 85 is much smaller than for a conventional twin screw extruder. Also, the pressure in the paddle mixer should remain below 0.35 MPa gauge (50 psig), preferably below 0.14 MPa gauge (20 psig), when there is a large percentage of paddles compared to other elements. Each paddle 85, when viewed from the front as in FIG. 15, has a smaller width than height. Preferably, the ratio of height to width of each mixing paddle is more than 1.5:1. Most preferably, the ratio of height to width for each mixing paddle is more than 2:1.

The large amount of available barrel space also allows the method of the invention to be practiced at high residence times in paddle mixers. The high proportion of mixing paddles, especially flat paddles, also contributes to the longer residence times and lower pressure. The average residence time in the paddle mixer should be at least 10 minutes, preferably more than 15 minutes, most preferably more than 20 minutes.

The remaining operating parameters, e.g., mixer rpm, feed rates, production rates, etc. vary depending on the size of the mixer and on the specific gum base composition. A commercially available paddle mixer suitable for practicing the invention is a Teledyne Readco Continuous Processor, available from Teledyne Readco in York, Pennsylvania. These paddle mixers are available in a wide variety of sizes. Paddle diameters for the different size mixers range from 5 to 61 cm (2 to 24 inches), and the ratios of mixer length to diameter (L/D) range from 4:1 to 14:1. For purposes of the present invention, the maximum paddle diameter is preferably between 5 and 13 cm (2 inches and 5 inches), and the L/D is preferably about 7:1. The paddle mixer configuration and process conditions should be selected so that a homogeneous gum base product is achieved.

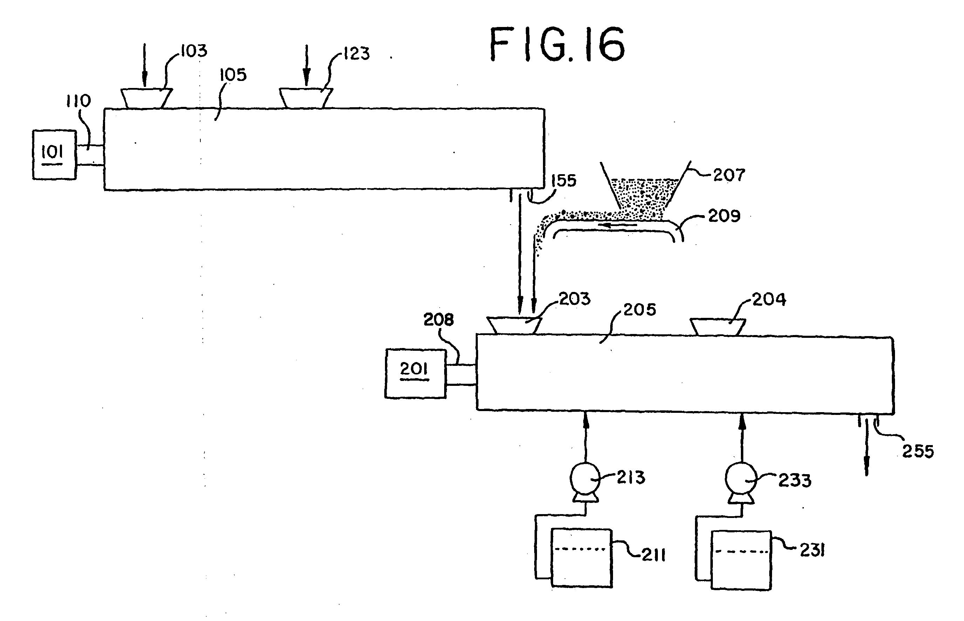

In a particularly useful embodiment, two or more paddle mixers may be used in series, in the manner illustrated in FIG. 16. The use of two mixers in series allows greater flexibility for feeding different gum base ingredients at different locations. A combination of elastomer, filler and resin can be continuously fed via feed port 103 to the feed barrel 105 of the first mixer. These materials are mixed in the first mixer, after which additional resin can be added to the first mixer via feed port 123. The combined ingredients are blended in the first mixer, and leave the first mixer at the exit 155, whereupon they are immediately fed into the barrel 205 of the second mixer 208 (powered by motor 201) via the feed port 203. Polyvinyl acetate can also be continuously fed to the barrel 205 from hopper 207, via feed conveyor 209 and feed port 203.

Further ingredients, such as waxes or oils, can be injected into the second mixer from feed tanks 211 and 231, via pumps 213 and 233. Optionally, a portion of ingredients can be added into a downstream feed port 204. After all the components are mixed, the gum base leaves the second mixer via exit 255. A wide variety of different feeding and mixing arrangements can also be employed using two or more paddle mixers in series, in order to achieve good dispersion of ingredients and a wide variety of gum base products.

In addition to the paddles described above, a wide variety of mixing paddles, available from various extruder companies, can be used. Paddles, often called kneading elements, must have the effect of mixing in an extruder. Paddles can be two-sided, three-sided, or multiple sided.

The paddle mixer, which may be referred to as a compounder, has different characteristics than a typical extruder even though the same equipment may be used. The difference between an extruder and a compounder is the ratio of paddles or kneading elements to the conveying elements. Conveying elements and compression elements cause an extruder to build up pressure. Paddles or kneading elements do not build as much pressure in the extruder, thus there is more mixing with low pressure. If the extruder contains at least 40% kneading elements, then the pressure can be about one-fifth to one-tenth that of a typical extruder which uses more conveying and compression elements.

Nearly all extruders can be used as compounders. However, compounders which have a low L/D ratio of 3:1 to 20:1 cannot generally be used as high pressure extruders. Also, compounders with this low L/D ratio have less effective shaft length and may require more paddle or kneading elements compared to conveying elements. For this type of compounder, mixing paddles should cover at least 50%, and preferably at least 60% of the shaft. Conversely, for an extruder having an L/D of 20/1 to 40/1, only about 40% of the shaft needs to be covered with mixing paddles or kneading elements. For extruders with high L/D ratios greater than 40/1, only about 30% of the shaft may need to be covered with mixing paddles or kneading elements.

One of the key advantages to the preferred embodiment of the paddle mixer disclosed above is that the residence time is much higher than in typical extruders. Many extruders provide a residence time of less than 2 minutes or even less than 1 minute. However, in the preferred paddle mixer described above, a residence time of at least 10 minutes, and preferably at least 15-20 minutes, can be provided.

### C. Blade-and-Pin Mixers

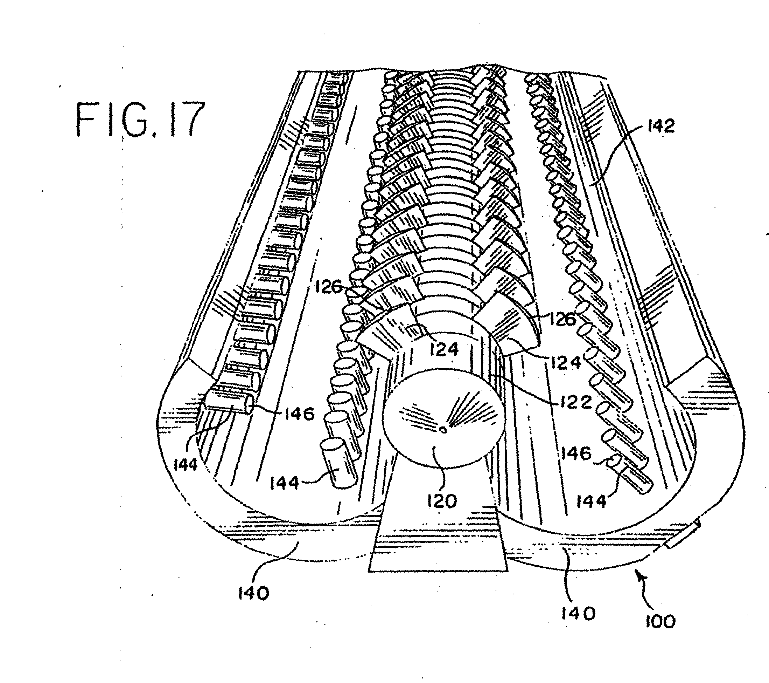

The method of the present invention may also be advantageously performed using a continuous mixer whose mixing screw is composed primarily of precisely arranged mixing elements with only a minor fraction of simple conveying elements. A presently preferred mixer is a blade-and-pin mixer exemplified in Fig. 17. This mixer may be used to produce not only gum base, but an entire chewing gum composition. A blade-and-pin mixer uses a combination of selectively configured rotating mixer blades and stationary barrel pins to provide efficient mixing over a relatively short distance. A commercially available blade-and-pin mixer is the Buss kneader, manufactured by Buss AG in Switzerland, and available from Buss America, located in Bloomingdale, Illinois.

Referring to FIG. 17, a presently preferred blade-and-pin mixer 100 includes a single mixing screw 120 turning inside a barrel 140 which, during use, is generally closed and completely surrounds the mixing screw 120. The mixing screw 120 includes a generally cylindrical shaft 122 and three rows of mixing blades 124 arranged at evenly spaced locations around the screw shaft 122 (with only two of the rows being visible in FIG. 1). The mixing blades 124 protrude radially outward from the shaft 122, with each one resembling the blade of an axe.

The mixing barrel 140 includes an inner barrel housing 142 which is generally cylindrical when the barrel 140 is closed around the screw 120 during operation of the mixer 100. Three rows of stationary pins 144 are arranged at evenly spaced locations around the screw shaft 142, and protrude radially inward from the barrel housing 142. The pins 144 are generally cylindrical in shape, and may have rounded or bevelled ends 146.

The mixing screw 120 with blades 124 rotates inside the barrel 140 and is driven by a variable speed motor (not shown). During rotation, the mixing screw 120 also moves back and forth in an axial direction, creating a combination of rotational and axial mixing which is highly efficient. During mixing, the mixing blades 124 continually pass between the stationary pins 144, yet the blades and the pins never touch each other. Also, the radial edges 126 of the blades 124 never touch the barrel inner surface 142, and the ends 146 of the pins 144 never touch the mixing screw shaft 122.

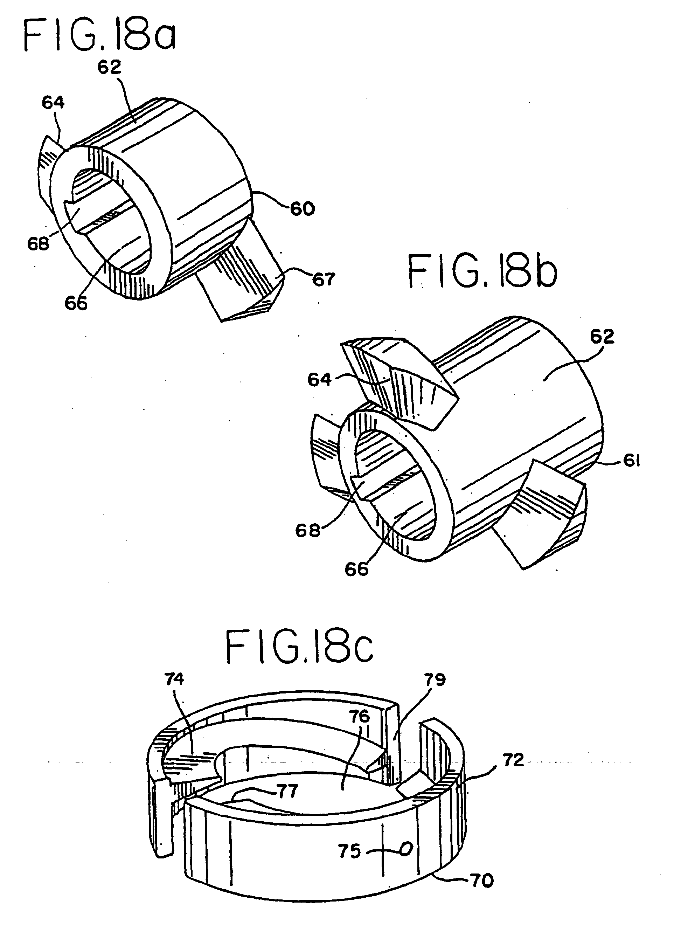

FIGS. 18-22 illustrate various screw elements which can be used to configure the mixing screw 120 for optimum use. Figs. 18a and 18b illustrate on-screw elements 60 and 61 which are used in conjunction with a restriction ring assembly. The on-screw elements 60 and 61 each include a cylindrical outer surface 62, a plurality of blades 64 projecting outward from the surface 62, and an inner opening 66 with a keyway 68 for receiving and engaging a mixing screw shaft (not shown). The second on-screw element 61 is about twice as long as the first on-screw element 60.

FIG. 18c illustrates a restriction ring assembly 70 used to build back pressure at selected locations along the mixing screw 120. The restriction ring assembly 70 includes two halves 77 and 79 mounted to the barrel housing 142, which halves engage during use to form a closed ring. The restriction ring assembly 70 includes a circular outer rim 72, an inner ring 74 angled as shown, and an opening 76 in the inner ring which receives, but does not touch, the on-screw elements 60 and 61 mounted to the screw shaft. Mounting openings 75 in the surface 72 of both halves of the restriction ring assembly 70 are used to mount the halves to the barrel housing 142.

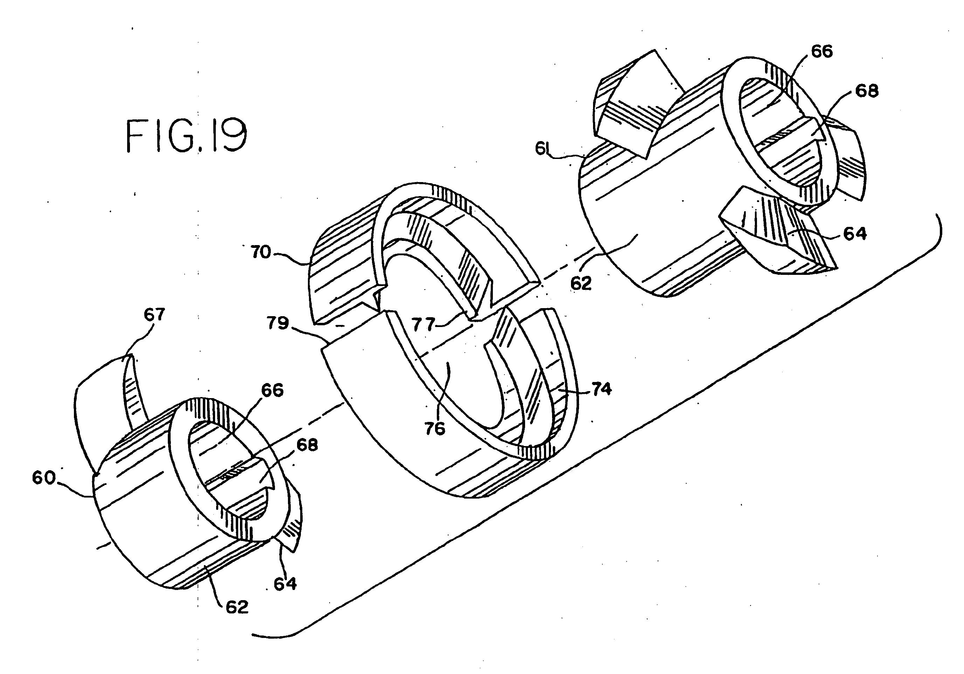

FIG. 19 illustrates the relationship between the restriction ring assembly 70 and the on-screw elements 60 and 61 during operation. When the mixing screw 120 is turning inside the barrel 140, and reciprocating axially, the clearances between the on-screw elements 60 and 61 and the inner ring 74 provide the primary means of passage of material from one side of the restriction ring assembly 70 to the other. The on-screw element 60 on the upstream side of the restriction ring assembly includes a modified blade 67 permitting clearance of the inner ring 74. The other on-screw element 61 is placed generally downstream of the restriction ring assembly 70, and has an end blade (not visible) which moves close to and wipes the opposite surface of the inner ring 74.

The clearances between outer surfaces 62 of the on-screw elements 60 and 61 and the inner ring 74 of the restriction ring assembly 70, which can vary and preferably are on the order of 1-5 mm, determine to a large extent how much pressure build-up will occur in the upstream region of the restriction ring assembly 70 during operation of the mixer 100. It should be noted that the upstream on-screw element 60 has an L/D of about 1/3, and the downstream on-screw element 61 has an L/D of about 2/3, resulting in a total L/D of about 1.0 for the on-screw elements. The restriction ring assembly 70 has a smaller L/D of about 0.45 which coincides with the L/D of the on-screw elements 60 and 61, which engage each other but do not touch the restriction ring assembly.

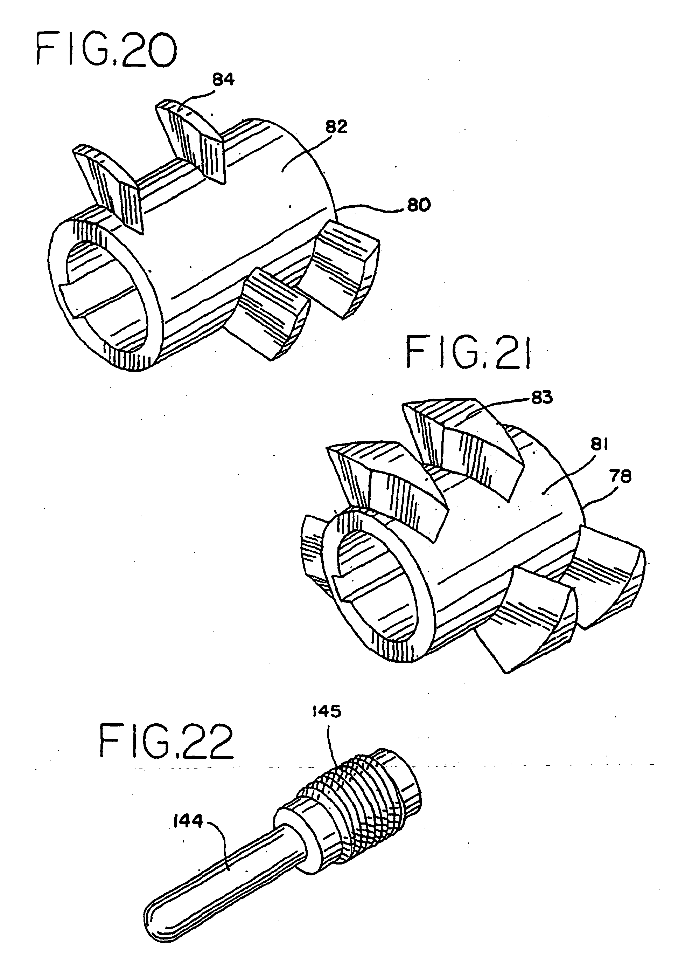

Figs. 20 and 21 illustrate the mixing or "kneading" elements which perform most of the mixing work. The primary difference between the lower shear mixing element 80 of FIG. 20 and the higher shear mixing element 78 of FIG. 21 is the size of the mixing blades which project outward on the mixing elements. In FIG. 21, the higher shear mixing blades 83 which project outward from the surface 81 are larger and thicker than the lower shear mixing blades 84 projecting outward from the surface 82 in FIG. 20. For each of the mixing elements 80 and 78, the mixing blades are arranged in three circumferentially-spaced rows, as explained above with respect to FIG. 17. The use of thicker mixing blades 83 in FIG. 21 means that there is less axial distance between the blades and also less clearance between the blades 83 and the stationary pins 144 as the screw 120 rotates and reciprocates axially (FIG. 17). This reduction in clearance causes inherently higher shear in the vicinity of the mixing elements 78. FIG. 22 illustrates a single stationary pin 144 detached from the barrel 140. The pin 144 includes a threaded base 145 which permits attachment at selected locations along the inner barrel shaft 142. It is also possible to configure some of the pins 144 as liquid injection ports by providing them with hollow center openings.

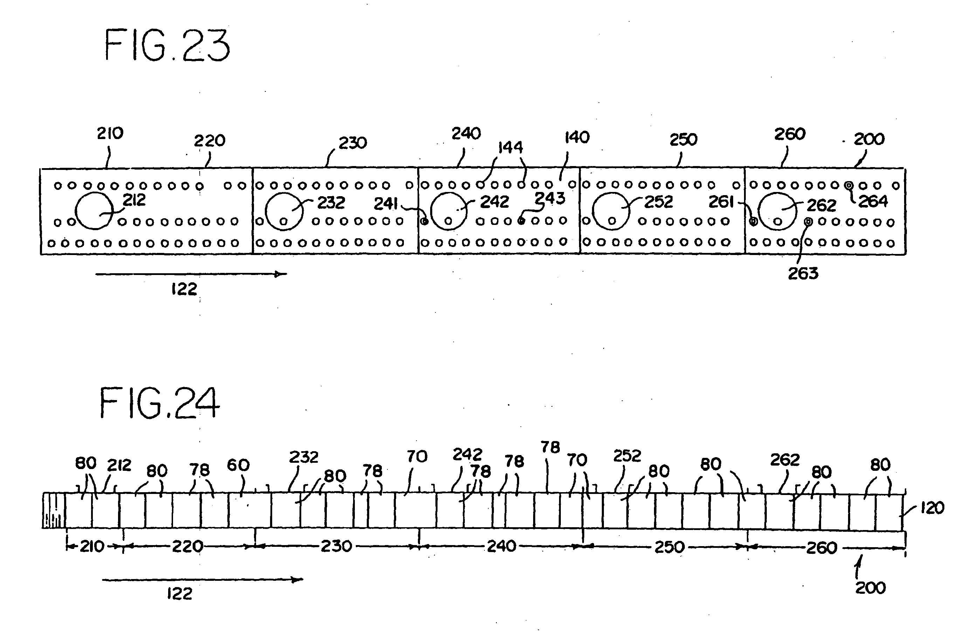

FIG. 23 is a schematic view showing the presently preferred barrel configuration, including the presently preferred arrangement of barrel pins 144. FIG. 24 is a corresponding schematic view illustrating the presently preferred mixing screw configuration. The mixer 200 whose preferred configuration is illustrated in FIGS. 23 and 24 has an overall active mixing L/D of about 19.

The mixer 200 includes an initial feed zone 210 and five mixing zones 220, 230, 240, 250 and 260. The zones 210, 230, 240, 250 and 260 include five possible large feed ports 212, 232, 242, 252 and 262, respectively, which can be used to add major (e.g. solid) ingredients to the mixer 200. The zones 240 and 260 are also configured with five smaller liquid injection ports 241, 243, 261, 263 and 264 which are used to add liquid ingredients. The liquid injection ports 241, 243, 261, 263 and 264 include special barrel pins 144 formed with hollow centers, as explained above.

Referring to FIG. 23, barrel pins 144 are preferably present in most or all of the available locations, in all three rows as shown.

Referring to FIG. 24, the presently preferred configuration of the mixing screw 120 for most chewing gum products is schematically illustrated as follows. Zone 210, which is the initial feed zone, is configured with about 1-1/3 L/D of low shear elements, such as the element 40 shown in FIG. 4. The L/D of the initial feed zone 210 is not counted as part of the overall active mixing L/D of 19, discussed above, because its purpose is merely to convey ingredients into the mixing zones.

The first mixing zone 220 is configured, from left to right (FIG. 24), with two low shear mixing elements 80 (FIG. 20) followed by two high shear elements 78 (FIG. 21). The two low shear mixing elements contribute about 1-1/3 L/D of mixing, and the two high shear mixing elements contribute about 1-1/3 L/D of mixing. Zone 220 has a total mixing L/D of about 3.0, including the end part covered by a 57mm restriction ring assembly 70 with cooperating on-screw elements 60 and 61 (not separately designated in FIG. 24).

The restriction ring assembly 70 with cooperating on-screw elements 60 and 61, straddling the end of the first mixing zone 220 and the start of the second mixing zone 230, have a combined L/D of about 1.0, part of which is in the second mixing zone 230. Then, zone 230 is configured, from left to right, with three low shear mixing elements 80 and 1.5 high shear mixing elements 78. The three low shear mixing elements contribute about 2.0 L/D of mixing, and the 1.5 high shear mixing elements contribute about 1.0 L/D of mixing. Zone 230 has a total mixing L/D of about 4.0.

Straddling the end of the second mixing zone 230 and the start of the third mixing zone 240 is a 60mm restriction ring assembly 70 with cooperating on-screw elements 60 and 61 having an L/D of about 1.0. Then, zone 240 is configured, from left to right, with 4.5 high shear mixing elements 78 contributing a mixing L/D of about 3.0. Zone 240 also has a total mixing L/D of about 4.0.

Straddling the end of the third mixing zone 240 and the start of the fourth mixing zone 250 is another 60mm restriction ring assembly 70 with cooperating on-screw elements having an L/D of about 1.0. Then, the remainder of the fourth mixing zone 250 and the fifth mixing zone 260 are configured with eleven low shear mixing elements 80 contributing a mixing L/D of about 7¹/₃. Zone 250 has a total mixing L/D of about 4.0, and zone 260 has a total mixing L/D of about 4.0.

### Examples 1-5

For Examples 1-5, a two mixer arrangement was used. In some of the examples, polyvinyl acetate is added to the first continuous mixer and volatiles are vented when the mass from the first mixer is added to the second continuous mixer. This allows any acetic acid vapors generated in the first mixer to escape. In other examples, polyvinyl acetate is added to the first feed port of the second continuous mixer. An open feed port downstream acts as a vent in the second mixer to ventilate polyvinyl acetate volatiles.

### Example 1

This example was performed using a two-mixer arrangement. A 2-inch Teledyne Readco Continuous Mixer was configured as described in Table 2. A 13 cm (5-inch) Teledyne Readco Continuous Mixer was configured as described in Table 1 except that a reverse helical paddle was placed in position 19. The feed ports were arranged as follows:

| | |
|---|---|
| Feed Port No. 1 - | above longitudinal positions 1 - 4 on 5 cm (2-inch) mixer |
| | |
| Feed Port No. 2 - | above longitudinal positions 1 - 4 on 13 cm (5-inch) mixer |
| | |
| Feed Port No. 3 - | above longitudinal positions 20 - 23 on 13 cm (5-inch) mixer |

**Table 2:**

| Mixer Configuration (Per Shaft) For 5 cm (2-Inch) Teledyne Readco Mixer | | | | | |
|---|---|---|---|---|---|
| Longitudinal Position | Element | Rotational Position | Longitudinal Position | Element | Rotational Position |
| 1 | FC | 4 | 16 | FP | 2 |
| 2 | FC | 4 | 17 | FP | 4 |
| 3 | FC | 4 | 18 | FP | 4 |
| 4 | FC | 4 | 19 | FP | 4 |
| 5 | FP | 4 | 20 | FP | 2 |
| 6 | FP | 4 | 21 | FP | 2 |
| 7 | FP | 4 | 22 | FP | 2 |
| 8 | FP | 2 | 23 | FP | 3 |
| 9 | FP | 2 | 24 | FP | 4 |
| 10 | FP | 2 | 25 | FP | 1 |
| 11 | FP | 4 | 26 | FP | 2 |
| 12 | FP | 4 | 27 | FP | 4 |
| 13 | FP | 4 | 28 | FP | 4 |
| 14 | FP | 2 | 29 | RH | 2 |
| 15 | FP | 2 | | | |

Using the above mixer arrangement, chewing gum base was made as follows.

A mixture of ground isobutylene-isoprene copolymer (2-7 mm particle size), calcium carbonate (<12 µm (micron) particle size), and terpene resin at a ratio of 8:21:17 was fed at a rate of 0.174 kg/min (0.383 lb/min). at the first feed inlet. In the second feed inlet, a powder blend of polyvinyl acetate, glycerol monostearate, and hydrogenated soybean and vegetable oil at a ratio of 24:5:13 were fed at a rate of 0.16 kg/min (0.35 lb/min). In the third feed port, 6 parts of polyisobutylene at 130°C at a feed rate of 0.02 kg/min (0.05 lb/min). and 6 parts of a 50/50 mixture of hydrogenated cottonseed oil/lecithin at 70°c at a feed rate of 0.02 kg/min (0.05 lb/min). were added.

Overall, the production rate for the gum base was 23 kg per hour (50 pounds per hour). The gum base was manufactured using the following process conditions:

| | 5 cm (2-Inch) Mixer | 13 cm (5-Inch) Mixer |
|---|---|---|
| RPM | 310 | 387 |
| Initial Barrel Temp., °F | 135 - 138°C (275-280) | 118 - 116 °C (235-240) |
| Product Exit Temp., °C | 162 | 120 |
| Average Residence Time | 2-6 min. | 30-40 min. |

About 18 kg (40 pounds) of gum base product was made at these conditions. The gum base had normal color, a smooth texture, and a homogeneous consistency, except for an occasional isolated undispersed particle.

### Example 2

This example was performed using a two-mixer arrangement with two 13 cm (5-inch) Teledyne Readco Continuous Mixer Compounders. The first compounder was configured as in Table 3. The second compounder was configured based on Table 1, shown previously. This configuration is also shown in Figure 13.

The feed ports were arranged as follows:

| | |
|---|---|
| Feed Port No. 1 - | above longitudinal positions 1 - 4 on first 13 cm (5-inch) mixer |
| | |
| Feed Port No. 2 - | above longitudinal positions 1 - 4 on second 13 cm (5-inch) mixer |
| | |
| Feed Port No. 3 - | above longitudinal positions 20-23 on second 13 cm (5-inch) mixer. |

**Table 3:**

| Mixer Configuration (Per Shaft) For 5-Inch Teledyne Readco Mixer | | | | | |
|---|---|---|---|---|---|
| Longitudinal Position | Element | Rotational Position | Longitudinal Position | Element | Rotational Position |
| 1 | FC | 4 | 19 | FP | 2 |
| 2 | PC | 4 | 20 | FP | 2 |
| 3 | FC | 4 | 21 | FP | 4 |
| 4 | FC | 4 | 22 | FP | 4 |
| 5 | FC | 4 | 23 | FP | 4 |
| 6 | FC | 4 | 24 | FP | 2 |
| 7 | FC | 4 | 25 | FP | 2 |
| 8 | FC | 4 | 26 | FP | 2 |
| 9 | FP | 4 | 27 | FP | 4 |
| 10 | FP | 4 | 28 | FP | 4 |
| 11 | FP | 4 | 29 | FP | 4 |
| 12 | FP | 2 | 30 | FP | 1 |
| 13 | FP | 2 | 31 | FP | 2 |
| 14 | FP | 2 | 32 | FP | 3 |
| 15 | FP | 4 | 33 | FP | 4 |
| 16 | FP | 4 | 34 | FP | 2 |
| 17 | FP | 4 | 35 | FP | 2 |
| 18 | FP | 2 | 36 | RH | 4 |

Using the above mixer arrangement, chewing gum base was made as follows:

A mixture of ground isobutylene-isoprene copolymer (2-7 mm particle size), calcium carbonate (<12 µm (micron) particle size), terpene resin, and powder color at a ratio of 11:18:17:1 was fed at a rate of 0.651 kg/min (1.435 lb/min). in the first feed inlet. In the second feed inlet, a powder blend of polyvinyl acetate, glycerol monostearate, and hydrogenated soybean and vegetable oil at a ratio of 24:5:12 was fed at a rate of 0.573 kg/min (1.264 lb/min). In the third feed port, 6 parts of polyisobutylene at 95°C at a feed rate of 0.082 kg/min (0.181 lb/min.) and 6 parts of a 50/50 mixture of hydrogenated cottonseed oil/lecithin at 80°C at a feed rate of 0.092 kg/min (0.203 lb/min.) were added.

Overall, the production rate for the gum base was about 84 kg per hour (185 pounds per hour). The gum base was manufactured using the following process conditions:

| | First 13 cm (5-Inch) Mixer | Second 13 cm (5-Inch) Mixer |
|---|---|---|
| RPM | 250 | 400 |
| Initial Barrel Temp., °C | 135 | 115 |
| Product Exit Temp., °C | 190 | 115 |
| Average Residence Time | 20 min. | 10 min. |

About 91 kg (200 pounds) of gum base product was made. The gum base had normal color, no lumps, no unincorporate oil, but had a burnt off taste and odor.

### Example 3

This example was performed using a two-mixer arrangement with two 13 cm (5-inch) Teledyne Readco Continuous Mixer Compounders. Both compounders were configured with the same paddle configuration that was shown in Table 1. Four feed ports were arranged as follows:

| | |
|---|---|
| Feed Port No. 1 - | above longitudinal positions 1 - 4 on first 13 cm (5-inch) mixer |
| Feed Port No. 2 - | above longitudinal positions 20 - 23 on first 13 cm (5-inch) mixer |
| Feed Port No. 3 - | above longitudinal positions 1 - 4 on second 13 cm (5-inch) mixer |
| Feed Port No. 4 - | above longitudinal positions 20 - 23 on second 13 cm (5-inch) mixer. |

Using the above mixer arrangement, chewing gum base was made as follows:

A mixture of ground isobutylene-isoprene copolymer (2-7 mm particle size), calcium carbonate (<12 µm (micron) particle size), and polyvinyl acetate at a ratio of 13:10:7 was fed at a rate of 0.34 kg/min (0.75 lb/min.) in the first feed inlet. In the second feed inlet, 15 parts of polyvinyl acetate was added at 0.170 kg/min (0.375 lb/min.) In the third feed port, hydrogenated vegetable oil, hydrogenated soybean oil, and glycerol monostearate at a ratio of 13:13:3 were added at a rate of 0.329 kg/min (0.725 lb/min). In the fourth feed port, 10 parts of partially hydrogenated vegetable oil at 0.11 kg/min (0.25 lb/min.), and 16 parts of polyisobutylene at 130°C at a rate of 0.18 kg/min (0.40 lb/min.) were added.

Overall, the production rate for the gum base was 68 kg per hour (150 pounds per hour). The gum base was manufactured using the following process conditions:

| | First 13 cm (5-Inch) Mixer | Second 13 cm (5-Inch) Mixer |
|---|---|---|
| RPM | 373 | 374 |
| Initial Barrel Temp., °C | 150-180 | 110 |
| Product Exit Temp., °C | 165-191 | 111 |
| Average Residence Time | 20-30 min. | 12-15 min. |

About 181.4 kg (400 pounds) of gum base product was made. The gum base had normal color, no lumps, no unincorporated oil, and clean taste and odor.

### Example 4

This example was made using the same equipment, mixer arrangement, screw configuration, and feed ports as Example 3, except feed port No. 2 was closed off. The gum base was made as follows:

A mixture of ground isobutylene-isoprene copolymer (2-7 mm particle size), calcium carbonate (<12 µm (micron) particle size), terpene resin, and polyvinyl acetate at a ratio of 11:18:17:6 was fed at a rate of 0.59 kg/hr (1.30 lb/min.) in the first feed inlet. In the third feed inlet, a powder blend of polyvinyl acetate, glycerol monostearate, hydrogenated soybean oil and vegetable oil, and powdered color at a ratio of 18:5:12:1 was fed at a rate of 0.41 kg/hr (0.90 lb/min.) In the fourth feed inlet, 6 parts of polyisobutylene at 130°C was added at a rate of 0.07 kg/min (0.15 lb/min.), and 6 parts at a 50/50 blend of lecithin and hydrogenated cottonseed oil at 90°C was added at a rate of 0.07 kg/min (0.15 lb/min).

Overall, the production rate for the gum base was 68 kg per hour (150 pounds per hour). The gum base was manufactured using the following process conditions.

| | First 13 cm (5-Inch) Mixer | Second 13 cm (5-Inch) Mixer |
|---|---|---|
| RPM | 300 | 373 |
| Initial Barrel Temp., °C | 150-180 | 110 |
| Product Exit Temp., °C | 172 | 113 |
| Average Residence Time | 20-30 min. | 12-15 min. |

About 181 kg (400 pounds) of gum base product was made. The gum base had normal color, no lumps, no unincorporated oil, and clean taste and odor.

### Example 5

This example was performed using a two-mixer arrangement with two 13 cm (5-inch) Teledyne Readco Continuous Mixer Compounders. Both compounders were configured according to the following Table 4. The feed ports were the same as Example 4, except feed port No. 2 was closed off.

**Table 4:**

| Mixer Confiquration (Per Shaft) | | | | | |
|---|---|---|---|---|---|
| Longitudinal Position | Element | Rotational Position | Longitudinal Position | Element | Rotational Position |
| 1 | FC | 4 | 19 | FP | 3 |
| 2 | FC | 4 | 20 | FC | 3 |
| 3 | FC | 4 | 21 | FC | 3 |
| 4 | FC | 4 | 22 | FC | 3 |
| 5 | FC | 4 | 23 | FC | 3 |
| 6 | FC | 4 | 24 | FC | 3 |
| 7 | FC | 4 | 25 | FC | 3 |
| 8 | FC | 4 | 26 | FC | 3 |
| 9 | FP | 4 | 27 | FC | 3 |
| 10 | FP | 4 | 28 | FP | 2 |
| 11 | FP | 4 | 29 | FP | 2 |
| 12 | FP | 2 | 30 | FP | 4 |
| 13 | FP | 2 | 31 | FP | 4 |
| 14 | FP | 2 | 32 | FP | 4 |
| 15 | FP | 4 | 33 | FP | 2 |
| 16 | FP | 4 | 34 | FP | 2 |
| 17 | FP | 1 | 35 | FP | 4 |
| 18 | FP | 2 | 36 | RH | 4 |

Using the above mixer arrangement, chewing gum base was made as follows.

A mixture of ground isobutylene-isoprene copolymer (2-7 mm particle size), and calcium carbonate, terpene resins, and polyvinyl acetate at a ratio of 11:18:17:1 was added at a rate of 0.533 kg/min (1.175 lb/min.) to feed inlet No. 1. To feed inlet No. 3 a powder blend of polyvinyl acetate, glycerol monostearate, hydrogenated soybean and vegetable oils, and powdered color at a ratio of 23:5:12:1 was fed at a rate of 0.465 kg/min (1.025 lb/min.) To feed inlet No. 4, 6 parts of polyisobutylene at 130°C was added at a rate of 0.07 kg/min (0.15 lb/min.), and 6 parts of a 50/50 blend of lecithin and hydrogenated cottonseed oil at 90°C was added at a rate of 0.07 kg/min (0.15 lb/min.)

Overall, the production rate for the gum base was 68 kg per hour (150 pounds per hour). The gum base was manufactured using the following process conditions:

| | First 13 cm (5-Inch) Mixer | Second 13 cm (5-Inch) Mixer |
|---|---|---|
| RPM | 250 | 376 |
| Initial Barrel Temp., °C | 150-180 | 110 |
| Product Exit Temp., °C | 175 | 120 |
| Average Residence Time | 20-30 min. | 12-15 min. |

About 159 kg (350 pounds) of gum base was made. The gum base had normal color, no lumps, no unincorporated oil, and clean taste and odor.

### Examples 6-12 - Continuous Chewing Gum Manufacture

In Examples 6-12, the chewing gum base is made in a blade-and-pin mixer, which is then also used to complete the making of the chewing gum composition. In order to accomplish the total chewing gum manufacture using the preferred blade-and-pin mixer 200 (Fig. 17), it is advantageous to maintain the rpm of the mixing screw 120 at less than 150, preferably less than 100. Also, the mixer temperature is preferably optimized so that the gum base is at 54°C (130°F) or lower when it initially meets the other chewing gum ingredients, and the chewing gum product is at 54°C (130°F) or lower (preferably 52°C (125°F) or lower) when it exits the mixer. This temperature optimization can be accomplished, in part, by selectively heating and/or water cooling the barrel sections surrounding the mixing zones 220, 230, 240, 250 and 260 (Fig. 23).

In order to manufacture the gum base, the following preferred procedure can be followed. The elastomer, filler, and at least some of the elastomer solvent are added to the first large feed port 212 in the feed zone 210 of the mixer 200, and are subjected to highly dispersive mixing in the first mixing zone 220 while being conveyed in the direction of the arrow 122. The remaining elastomer solvent (if any) and polyvinyl acetate are added to the second large feed port 232 in the second mixing zone 230, and the ingredients are subjected to a more distributive mixing in the remainder of the mixing zone 230.

Fats, oils, waxes (if used), emulsifiers and, optionally, colors and antioxidants, are added to the liquid injection ports 241 and 243 in the third mixing zone 240, and the ingredients are subjected to distributive mixing in the mixing zone 240 while being conveyed in the direction of the arrow 122. At this point, the gum base manufacture should be complete, and the gum base should leave the third mixing zone 240 as a substantially homogeneous, lump-free compound with a uniform color.

The fourth mixing zone 250 is used primarily to cool the gum base, although minor ingredient addition may be accomplished. Then, to manufacture the final chewing gum product, glycerin, corn syrup, other bulk sugar sweeteners, high intensity sweeteners, and flavors can be added to the fifth mixing zone 260, and the ingredients are subjected to distributive mixing. If the gum product is to be sugarless, hydrogenated starch hydrolyzate or sorbitol solution can be substituted for the corn syrup and powdered alditols can be substituted for the sugars.

Preferably, glycerin is added to the first liquid injection port 261 in the fifth mixing zone 260. Solid ingredients (bulk sweeteners, encapsulated high intensity sweeteners, etc.) are added to the large feed port 262. Syrups (corn syrup, hydrogenated starch hydrolyzate, sorbitol solution, etc.) are added to the next liquid injection port 263, and flavors are added to the final liquid injection port 264. Flavors can alternatively be added at ports 261 and 263 in order to help plasticize the gum base, thereby reducing the temperature and torque on the screw. This may permit running of the mixer at higher rpm and throughput.

The gum ingredients are compounded to a homogeneous mass which is discharged from the mixer as a continuous stream or "rope". The continuous stream or rope can be deposited onto a moving conveyor and carried to a forming station, where the gum is shaped into the desired form such as by pressing it into sheets, scoring, and cutting into sticks. Because the entire gum manufacturing process is integrated into a single continuous mixer, there is less variation in the product, and the product is cleaner and more stable due.to its simplified mechanical and thermal histories.

The following Examples 6-12 were run using a Buss kneader with a 100mm mixer screw diameter, configured in the preferred manner described above (unless indicated otherwise), with five mixing zones, a total mixing L/D of 19, and an initial conveying L/D of 1-1/3. No die was used at the end of the mixer, unless indicated otherwise, and the product mixture exited as a continuous rope. Each example was designed with feed rates to yield chewing gum product at the rate of 136 kg (300 pounds) per hour.

Liquid ingredients were fed using volumetric pumps into the large feed ports and/or smaller liquid injection ports generally positioned as described above, unless otherwise indicated. The pumps were appropriately sized and adjusted to achieve the desired feed rates.

Dry ingredients were added using gravimetric screw feeders into the large addition ports positioned as described above. Again, the feeders were appropriately sized and adjusted to achieve the desired feed rates.

In Examples 6-12, the fourth mixing zone 250 had a large feed port 252 that was left open. This allowed volatiles of base degradation products and polyvinyl acetate degradation to be ventilated.

Temperature control was accomplished by circulating fluids through jackets surrounding each mixing barrel zone and inside the mixing screw. Water cooling was used where temperatures did not exceed 93°C (200°F), and oil cooling was used at higher temperatures. Where water cooling was desired, tap water (typically at about 14°C 57°F) was used without additional chilling. Temperatures were recorded for both the fluid and the ingredient mixture. Fluid temperatures were set for each barrel mixing zone (corresponding to zones 220, 230, 240, 250 and 260 in Figs. 23 and 24), and are reported below as Z1, Z2, Z3, Z4 and Z5, respectively. Fluid temperatures were also set for the mixing screw 120, and are reported below as S1.

Actual mixture temperatures were recorded near the downstream end of mixing zones 220, 230, 240 and 250; near the middle of mixing zone 260; and near the end of mixing zone 260. These mixture temperatures are reported below as T1, T2, T3, T4, T5 and T6, respectively. Actual mixture temperatures are influenced by the temperatures of the circulating fluid, the heat exchange properties of the mixture and surrounding barrel, and the mechanical heating from the mixing process, and often differ from the set temperatures due to the additional factors.

All ingredients were added to the continuous mixer at ambient temperature about 25°C ((about 77°F)) unless otherwise noted.

### Example 6

This example illustrates the preparation of a spearmint flavored non-tack sugar chewing gum. A mixture of 24.2% terpene resin, 29.7% dusted ground butyl rubber (75% rubber with 25% fine ground calcium carbonate as an anti-blocking aid) and 46.1% fine ground calcium carbonate was fed at 11 kg/hr (25 lb/hr) into the first large feed port (port 212 in Figs. 23 and 24). Low molecular weight polyisobutylene (mol. wt. = 12,000), preheated to 100°C, was also added at 2.9 kg/hr (6.3 lb/hr) into this port.

Ground low molecular weight polyvinyl acetate was added at 6 kg/hr (13.3 lb/hr) into the second large feed port (port 232 in Figs. 23 and 24). Feed port 252 was left open to the atmosphere to allow ventilation of volatiles.

A fat mixture, preheated to 83°C, was injected into the liquid injection ports in the third mixing zone (ports 241 and 243 in Fig. 23), at a total rate of 8.3 kg/hr (18.4 lb/hr), with 50% of the mixture being fed through each port. The fat mixture included 30.4% hydrogenated soybean oil, 35.4% hydrogenated cottonseed oil, 13.6% partially hydrogenated soybean oil, 18.6% glycerol monostearate, 1.7% cocoa powder, and 0.2% BHT.

Glycerin was injected into the first liquid injection port in the fifth mixing zone (port 261 in Fig. 23) at 1.8 kg/hr (3.9 lb/hr). A mixture of 1.1% sorbitol and 98.9% sugar was added into the large feed port in the fifth mixing zone (port 262 in Fig. 23) at 84.2 kg/hr (185.7 lb/hr). Corn syrup, preheated to 44°C, was added into the second liquid injection port in the fifth mixing zone (port 263 in Fig. 23) at 20.1 kg/hr (44.4 lb/hr). Spearmint flavour was added into the third liquid injection port in the fifth mixing zone (port 264 in Fig. 23) at 1.4 kg/hr (3.0 lb/hr).

The zone temperatures Z1-Z5 were set (in °C) ((in °F)) at 177 (350), 177 (350), 66 (150), 14 (57), and 14 (57) respectively. The mixing screw temperature S1 was set at 49°C (120°F). The mixture temperatures T1-T6 were measured at steady state (in °C) ((in °F)) as 113 (235), 98 (209), 81 (177), 38 (101) and 38 (100), and fluctuated slightly during the trial. The screw rotation was 80 rpm.

The chewing gum product exited the mixer at 49°C (120°F). The product was comparable to that produced by conventional pilot scale batch processing. The chew was slightly rubbery but no base lumps were visible.

### Example 7

This example illustrates the preparation of a peppermint flavoured non-tack sugar chewing gum. A dry mixture of 57% dusted ground butyl rubber (75% rubber, 25% calcium carbonate) and 43% fine ground calcium carbonate was added at the first large feed port 212 (Fig. 23), at 6.3 kg/hr (13.9 lb/hr). Molten polyisobutylene (preheated to 100°C) was also added to port 212 at 4.3 kg/hr (9.5 lb/hr)

Ground low molecular weight polyvinyl acetate was added to port 232 at 5.9 kg/hr (13.0 lb/hr). Feed port 252 was left open to ventilate and remove volatiles.

A fat mixture (preheated to 82°C) was pumped 50/50 into ports 241 and 243 at a total rate of 10.7 kg/hr (23.6 lb/hr) The fat mixture included 33.6% hydrogenated cottonseed oil, 33.6% hydrogenated soybean oil, 24.9% partially hydrogenated soybean oil. 6.6% glycerol monostearate, 1.3% cocoa powder, and 0.1% BHT.

Glycerin was added to port 261 at 0.95 kg/hr (2.1 lb/hr). A mixture of 98.6% sugar and 1.4% sorbitol was added to port 262 at 89 kg/hr (196 lb/hr) Corn syrup (preheated to 40°C) was added to port 263 at 18.1 kg/hr (39.9 lb/hr). Peppermint flavour was added to port 264 at 0.95 kg/hr (2.1 lb/hr).

The zone temperatures (Z1-Z5 (°C) ((°F))) were set at 177 (350), 177 (350), 149 (300), 16 (60), and 16 (60) respectively. The screw temperature (S1) was set at 93°C (200°F). The mixture temperatures (T1-T6, °C (°F)) were measured as 147 (297), 109 (228), 126 (258), 50 (122) and 41 (106) respectively. The screw rotation was 85 rpm.

The chewing gum product exited the mixer at 48°C (119°F). The finished product was free of lumps but was dry and lacked tensile strength. These defects were attributed to the formula rather than the processing.

### Example 8

This example illustrates the preparation of a spearmint flavoured gum for pellet coating. A blend of 27.4% high molecular weight terpene resin, 26.9% low molecular weight terpene resin, 28.6% dusted ground butyl rubber (75% rubber, 25% calcium carbonate) and 17.1% fine ground calcium carbonate was fed into the first large port 212 (Fig. 23), at 15.2 kg/hr (33.5 lb/hr). Molten polyisobutyl (100°C) was pumped into the same port at 0.59 kg/hr (1.3 lb/hr).

Low molecular weight polyvinyl acetate was fed to port 232 at 8.98 kg/hr (19.8 lb/hr). Feed port 252 was left open to allow ventilation of volatiles.

A fat mixture (82°C) was added 50/50 into ports 241 and 243 at a total rate of 7.9 kg/hr (17.4 lb/hr). The fat mixture included 22.6% hydrogenated cottonseed oil, 21.0% partially hydrogenated soybean oil, 21.0% hydrogenated soybean oil, 19.9% glycerol monostearate, 15.4% lecithin, and 0.2% BHT.

Sugar was fed into port 262 at 71.6 kg/hr (157.8 lb/hr). Corn syrup (40°C) was added to port 263 at 31 kg/hr (68.4 lb/hr). Spearmint flavour was added to port 264 at 0.8 kg/hr (1.8 lb/hr).

The zone temperatures (Z1-Z5, °C (°F)) were set at 71 (160), 71 (160), 43 (110), 16 (60), and 16 (60) respectively. The screw temperature (S1) was set at 20°C (68°F). The mixture temperatures (T1-T6, °C (°F)) were measured as 110 (230), 102 (215), 74 (166), 41 (41), 43 (109) and 44 (111) respectively. The screw rotation was 80 rpm.

The chewing gum product exited the mixer at 49°C (121°F). The product was firm and cohesive when chewed (normal for a pellet center). No base lumps were visible.

### Example 9

This example illustrates the preparation of a peppermint flavoured sugar chewing gum. A blend of 24.4% dusted ground butyl rubber (75% rubber, 25% calcium carbonate), 18.0% low molecular weight terpene resin, 18.3% high molecular weight terpene resin and 39.4% fine ground calcium carbonate was added to the first large port 212 (Fig. 23) at 12.5 kg/hr (27.6 lb/hr).

A blend of 11.1% high molecular weight polyvinyl acetate and 88.9% low molecular weight polyvinyl acetate was added into the second large feed port 232 at 6.5 kg/hr (14.4 lb/hr). Polyisobutylene (preheated to 100°C) was also added to this port at 1.6 kg/hr (3.5 lb/hr). Feed port 252 was left open to ventilate volatiles.

A fat mixture (83°C) was added 50/50 into ports 241 and 243, at a total rate of 6.6 kg/hr (14.5 lb/hr). This fat mixture included 31.9% hydrogenated cottonseed oil, 18.7% hydrogenated soybean oil, 13.2% partially hydrogenated cottonseed oil, 19.8% glycerol monostearate, 13.7% soy lecithin, 2.5% cocoa powder and 0.2% BHT.

Glycerin was injected into port 261 at 1.8 kg/hr (3.9 lb/hr). A mixture of 84.6% sucrose and 15.4% dextrose monohydrate was added to port 262 at 92.1 kg/hr (203.1 lb/hr). Corn syrup (40°C) was injected into port 263 at 13.6 kg/hr (30.0 lb/hr). A mixture of 90% peppermint flavor and 10% soy lecithin was injected into port 264 at 1.4 kg/hr (3.0 lb/hr).

The zone temperatures (Z1-Z5, °C (°F) were set at 177 (350), 177 (350), 38 (100), 16 (60) and 16 (60) respectively, and the screw temperature (S1) was set at 38°C (100°F). The mixture temperature (T1-T6, °C (°F)) were measured as 153 (308), 127 (261), 68 (154), 35 (95), 34 (94) and 41 (105), respectively. The screw rotation was set at 55 rpm.

The product exited the mixer at 53 (127°F). The finished product had good chew characteristics and there was not evidence of rubber lumps.

### Example 10

This example illustrates the preparation of a fruit-flavoured sugar gum. A mixture of 39.3% dusted ground butyl rubber (75% rubber, 25% calcium carbonate), 39.1% low molecular weight terpene resin and 21.6% fine ground calcium carbonate was added to the first large feed port 212 (Fig. 23) at 9.3 kg/hr (20.6 lb/hr).

A mixture of 33.0% low molecular weight terpene resin and 67.0% low molecular weight polyvinyl acetate was added at 11.1 kg/hr (24.4 lb/hr into the second large feed port 232. Polyisobutylene (preheated to 100°C) was also added at 0.5 kg/hr (1.0 lb/hr) into the port 232. Feed port 252 was left open to allow ventilation of volatiles.

A fat/wax composition (82°C) was injected 50/50 into the liquid injection ports 241 and 243, at a total rate of 6.4 kg/hr (14.0 lb/hr). The composition included 29.7% paraffin wax, 21.7% microcrystalline wax (m.p. = 77°C (170°F), 5.7 microcrystalline wax (m.p. = 81°C (180°F)), 20.5% glycerol monostearate, 8.6% hydrogenated cottonseed oil, 11.4% soy lecithin, 2.1% cocoa powder, and 0.3% BHT.

Glycerin was injected into the liquid injection port 261 at 1.5 kg/hr (3.3 lb/hr). A mixture of 88.5% sucrose and 11.5% dextrose monohydrate was added at 91.2 kg/hr (201.0 lb/hr) into the large port 262. Corn syrup (40°C) was injected at 1.4 kg/hr (3.0 lb/hr) into the liquid injection port 263, and a mixture of 88.9% fruit flavour and 11.1% soy lecithin was injected at 1.2 kg/hr (2.7 lb/hr) into the liquid injection port 264.

The zone temperatures (Z1-Z5), °C (°F)) were set at 218 (425), 218 (425), 93 (200), 16 (61) and 16 (61), respectively. The screw temperature (S1) was set are 19°C (66°F). The mixture temperatures (T1-T6, °C (°F)) were measured as 182 (359), 137 (278), 85 (185), 41 (105), 38 (100) and 43 (109), respectively. The screw rotation was set at 70 rpm.

The chewing gum product exited the mixer at 50°C (122°F). The product was very soft while warm and fell apart during chewing. However, this was not atypical for this product. After aging for two months, the product was again chewed and found to have excellent texture and flavor. No rubber lumps were visible.

### Example 11

This example illustrates the preparation of a spearmint flavour sugarless gum. A mixture of 42.1% fine ground calcium carbonate, 18.9% glycerol ester of wood rosin, 16.7% glycerol ester of partially hydrogenated wood rosin, 17.0% ground butyl rubber, and 5.3% dusted ground (25:75) styrene butadiene rubber (75% rubber, 25% calcium carbonate) was added into port 212 (Fig. 23) at 17.4 kg/hr (38.4 lb/hr).

Low molecular weight polyvinyl acetate at 5.8 kg/hr (12.7 lb/hr), and polyisobutylene (preheated to 100°C) at 3.4 kg/hr (7.6 lb/hr) were added into port 232.

A fat mixture (82°C) was injected 50/50 into ports 241 and 243, at a total rate of 9.5 kg/hr (20.9 lb/hr). The fat mixture included 35.7% hydrogenated cottonseed oil, 30.7% hydrogenated soybean oil, 20.6% partially hydrogenated soybean oil, 12.8% glycerol monostearate and 0.2% BHT. Feed port 252 may remain open to allow ventilation of volatiles.

Unlike the previous examples, glycerin was injected at 11.6 kg/hr (25.5 lb/hr) into the fourth mixing zone 250 (Fig. 23) through a liquid injection port (not shown) downstream from port 252. A coevaporated blend of hydrogenated starch hydrolysate and glycerin (at 40°C) was injected further downstream in the fourth mixing zone 250 through another liquid injection port (not shown). The coevaporated blend included 67.5% hydrogenated starch hydrolysate solids, 25% glycerin and 7.5% water.

A mixture of 84.8% sorbitol, 14.8% mannitol and 0.4% encapsulated aspartame was added into port 262 in the fifth mixing zone 260, at 73.6 kg/hr (162.3 lb/hr). A mixture of 94.1% spearmint flavor and 5.9% lecithin was injected at 2.3 kg/hr (5.1 lb/hr) into the port 264 located further downstream.

The zone temperatures (Z1-Z5, °C (°F)) were set at 204 (400), 204 (400), 66 (150), 17 kg/hr (62) and 17 kg/hr (62), respectively. The screw temperature (S1) was set at 19 (66°F.). The mixture temperatures (T1-T6, °C (°F)) were measured as 153 (307), 133 (271), 94 (202), 48 (118), 39 (103) and 47 (116). The mixing screw rotation was 69 rpm.

The chewing gum product exited the mixer at 47°C (117°F). The gum had good appearance with no sorbitol spots or rubber lumps. The gum was slightly wet to the touch, sticky and fluffy (low density), but was acceptable. During chewing, the gum was considered soft initially but firmed up with continued chewing.

### Example 12

This example illustrates the preparation of a peppermint flavored sugar chewing gum. A mixture of 27.4% dusted ground butyl rubber (75% butyl rubber dusted with 25% calcium carbonate), 14.1% lower softening terpene resin (softening point = 85°C), 14.4% higher softening terpene resin (softening point = 125°C) and 44.1% calcium carbonate was fed at 11.2 kg/hr (24.6 lb/hr) into the first large feed port (port 212 in Figs. 23 and 24).

A mixture of 73.5% low molecular weight polyvinyl acetate, 9.2% high molecular weight polyvinyl acetate, 8.6 lower softening terpene resin and 8.7% higher softening terpene resin was fed at 7.9 kg/hr (17.4 lb/hr) into the second large feed port 232. Polyisobutylene was also added at 1.6 kg/hr (3.5 lb/hr) into this port.

A fat mixture, preheated to 83°C, was injected into the liquid injection ports in the third mixing zone (ports 241 and 243 in Fig. 23), at a total rate of 6.6 kg/hr (14.5 lb/hr) with 50% of the mixture being fed through each port. The fat mixture included 0.2% BHT, 2.5% cocoa powder, 31.9% hydrogenated cottonseed oil, 19.8% glycerol monostearate, 18.7% hydrogenated soybean oil, 13.7% lecithin, and 13.2% partially hydrogenated cottonseed oil. Feed port 252 was left open to ventilate volatiles.

A mixture of 84.6% sugar and 15.4% dextrose monohydrate was injected at 92.1 kg/hr (203.1 lb/hr) into the large feed port 262 in the fifth mixing zone. Glycerin was added at 1.8 kg/hr (3.9 lb/hr) into the first liquid injection port 261 in the fifth mixing zone. Corn syrup, preheated to 44°C, was added at 13.6 kg/hr (30.0 lb/hr) into the second liquid injection port 263 in the fifth mixing zone. A mixture of 90.0% peppermint flavor and 10.0% lecithin was injected into the third liquid injection port 264 in the fifth mixing zone at 1.4 kg/hr (3.0 lb/hr).

The zone temperatures Z1-Z5 were set (in °C (°F) at 177 (350), 177 (350), 43 (110), -4 (25) and -4 (25), respectively. The mixing screw temperature S1 was set at 38 (101°F). The mixer temperatures T1-T6 were measured at steady state (in °C (°F)) as 160 (320), 138 (280), 73 (164), 50 (122), 41 (105) and 39 (103), The screw rotation was 63 rpm, and the product exited the mixer at 52-53°C.

The peppermint sugar gum product was desirably soft, and acceptable in quality.

## Claims

1. A process for continuously producing a chewing gum base comprising the steps of:
a) continuously adding chewing gum base ingredients, including a hard elastomer, filler and one or more lubricating agents comprising polyvinyl acetate, into a continuous mixer comprising one or more feed inlets and vents, the polyvinyl acetate being added at one or more PVAC feed inlets;
b) venting acetic acid volatiles from the mixer at one or more vents downstream of said one or more PVAC feed inlets, said one or more vents not serving as a feed inlet for any chewing gum base ingredients that appreciably absorb acetic acid;
c) subjecting the chewing gum base ingredients to continuous mixing operations within the mixer, thereby producing a chewing gum base; and
d) continuously discharging the chewing gum base from the mixer while chewing gum base ingredients continue to be introduced and mixed within the mixer;
wherein the polyvinyl acetate degrades to give off said acetic acid when heated to 121-149°C (250-300°F).

2. The process of Claim 1 wherein one or more of said feed inlets comprises an open port into said mixer, said open port also serving as a vent.

3. The process of any one of the preceding claims wherein the continuous mixer has a barrel with an average inside diameter dimension D and at least one of the vents through which polyvinyl acetate volatiles are vented is within 4D of the one or more PVAC feed inlets.

4. The process of any one of the preceding claims wherein the continuous mixer comprises one piece of equipment.

5. The process of any one of the preceding claims wherein the mixer comprises a blade-and-pin mixer.

6. The process of any one of the preceding claims wherein the hard elastomer is brought into contact with the filler prior to any substantial mastication of the hard elastomer.

7. The process of any one of the preceding claims wherein the lubricating agents comprises an elastomer solvent and the elastomer solvent is introduced into the continuous mixer at two or more of said spatially separated feed inlet locations.

8. The process of any one of the preceding claims wherein the gum base is discharged from the mixer as part of a chewing gum composition.

9. The process of any one of the preceding claims wherein the hard elastomer is all added at a first feed inlet.

10. The process of claim 7 wherein the polyvinyl acetate is preblended with a portion of the elastomer solvent and added to the mixer therewith.

11. The process of any one of the preceding claims wherein at least one of said vents comprises a port connected to a vacuum source.

12. The process of any one of the preceding claims wherein the lubricating agents are selected from the group consisting of elastomer solvents, softening agents, soft elastomers, plastic polymers and mixtures thereof.

13. The process of claim 12 wherein the plastic polymers comprises polyvinyl acetate.

14. The process of claim 12 wherein the elastomer solvents are selected from the group consisting of terpene resins, natural rosin esters and mixtures thereof.

15. The process of claim 12 wherein the softening agents are selected from the group consisting of fats, oils, waxes, emulsifiers and mixtures thereof.

16. The process of claim 12 wherein the hard elastomers have a Flory molecular weight of over 200,000 and the soft elastomers have a Flory molecular weight of below 100,000.

17. The process of claim 16 wherein the soft elastomers are selected from the group consisting of polyisobutylene, polybutadiene and mixtures thereof.

18. The process of claim 16 wherein the hard elastomer is selected from the group consisting of isobutylene-isoprene copolymer, styrene-butadiene rubber, natural rubbers, natural gums and mixtures thereof.

19. The process of any one of the preceding claims wherein the polyvinyl acetate has a molecular weight in the range of 15,000 to 80,000.

20. A process for making a chewing gum composition wherein a gum base is made according to the process of any one of the preceding claims and mixed with flavouring agents and bulking agents to make said chewing gum composition.

## Patentansprüche

1. Verfahren zum kontinuierlichen Herstellen einer Kaugummibase, umfassend die Schritte:
a) kontinuierliches Zugeben von Kaugummibasen-Inhaltsstoffen, einschließlich eines harten Elastomers, Füllmittels und eines oder mehrerer Schmiermittel, umfassend Polyvinylacetat, in einen kontinuierlich arbeitenden Mischer, der einen oder mehrere Zufuhreinlässe und Entlüftungsöffnungen umfasst, wobei das Polyvinylacetat an einem oder mehreren PVAC-Zufuhreinlässen zugegeben wird;
b) Entlüften von flüchtigen Essigsäure-Substanzen aus dem Mischer an einer oder mehreren Entlüftungsöffnungen stromabwärts von dem einen oder den mehreren PVAC-Zufuhreinlässen, wobei die eine oder die mehreren Entlüftungsöffnungen nicht als Zufuhreinlass für irgendwelche Kaugummibasen-Inhaltsstoffe dienen, welche nennenswert Essigsäure absorbieren;
c) Unterwerfen der Kaugummibasen-Inhaltsstoffe kontinuierlichen Mischvorgängen innerhalb des Mischers, wodurch eine Kaugummibase hergestellt wird; und
d) kontinuierliches Austragen der Kaugummibase aus dem Mischer, während Kaugummibasen-Inhaltsstoffe weiterhin eingeführt und innerhalb des Mischers vermischt werden;
wobei sich das Polyvinylacetat unter Freisetzung der Essigsäure zersetzt, wenn es auf 121-149 °C (250-300 °F) erhitzt wird.

2. Verfahren nach Anspruch 1, wobei einer oder mehrere der Zufuhreinlässe einen offenen Anschluss in den Mischer umfasst, wobei der offene Anschluss auch als Entlüftungsöffnung dient.

3. Verfahren nach einem der vorhergehenden Ansprüche, wobei der kontinuierlich arbeitende Mischer eine Trommel mit einer Abmessung eines mittleren Innendurchmessers D aufweist und mindestens eine der Entlüftungsöffnungen, durch welche flüchtige Polyvinylacetat-Substanzen entlüftet werden, innerhalb von 4D von dem einen oder den mehreren PVAC-Zufuhreinlässen liegt.

4. Verfahren nach einem der vorhergehenden Ansprüche, wobei der kontinuierlich arbeitende Mischer ein Anlagenteil umfasst.

5. Verfahren nach einem der vorhergehenden Ansprüche, wobei der Mischer einen Flügel-Stift-Mischer umfasst.

6. Verfahren nach einem der vorhergehenden Ansprüche, wobei das harte Elastomer vor einer wesentlichen Mastikation des harten Elastomers mit dem Füllmittel in Kontakt gebracht wird.

7. Verfahren nach einem der vorhergehenden Ansprüche, wobei die Schmiermittel ein Elastomerlösungsmittel umfassen und das Elastomerlösungsmittel in den kontinuierlich arbeitenden Mischer an zwei oder mehreren der räumlich getrennten Zufuhreinlassorte eingeführt wird.

8. Verfahren nach einem der vorhergehenden Ansprüche, wobei die Gummibase als Teil einer Kaugummizusammensetzung aus dem Mischer ausgetragen wird.

9. Verfahren nach einem der vorhergehenden Ansprüche, wobei das harte Elastomer vollständig an einem ersten Zufuhreinlass zugegeben wird.

10. Verfahren nach Anspruch 7, wobei das Polyvinylacetat mit einem Teil des Elastomerlösungsmittels vorvermischt und zusammen damit dem Mischer zugegeben wird.

11. Verfahren nach einem der vorhergehenden Ansprüche, wobei mindestens eine der Entlüftungsöffnungen einen Anschluss umfasst, der mit einer Vakuumquelle verbunden ist.

12. Verfahren nach einem der vorhergehenden Ansprüche, wobei die Schmiermittel ausgewählt sind aus der Gruppe bestehend aus Elastomerlösungsmitteln, Weichmachern, weichen Elastomeren, Kunststoffpolymeren und Gemischen davon.

13. Verfahren nach Anspruch 12, wobei die Kunststoffpolymere Polyvinylacetat umfassen.

14. Verfahren nach Anspruch 12, wobei die Elastomerlösungsmittel ausgewählt sind aus der Gruppe bestehend aus Terpenharzen, natürlichen Harzestern und Gemischen davon.

15. Verfahren nach Anspruch 12, wobei die Weichmacher ausgewählt sind aus der Gruppe bestehend aus Fetten, Ölen, Wachsen, Emulgatoren und Gemischen davon.

16. Verfahren nach Anspruch 12, wobei die harten Elastomere ein Flory-Molekulargewicht über 200000 aufweisen und die weichen Elastomere ein Flory-Molekulargewicht unter 100000 aufweisen.

17. Verfahren nach Anspruch 16, wobei die weichen Elastomere ausgewählt sind aus der Gruppe bestehend aus Polyisobutylen, Polybutadien und Gemischen davon.

18. Verfahren nach Anspruch 16, wobei das harte Elastomer ausgewählt ist aus der Gruppe bestehend aus Isobutylen-Isopren-Copolymer, Styrol-Butadien-Kautschuk, natürlichen Kautschuken, Naturgummis und Gemischen davon.

19. Verfahren nach einem der vorhergehenden Ansprüche, wobei das Polyvinylacetat ein Molekulargewicht im Bereich von 15000 bis 80000 aufweist.

20. Verfahren zum Herstellen einer Kaugummizusammensetzung, wobei eine Gummibase gemäß dem Verfahren nach einem der vorhergehenden Ansprüche hergestellt wird und mit Aromastoffen und Füllstoffen vermischt wird, um die Kaugummizusammensetzung herzustellen.

## Revendications

1. Procédé pour la production en continu d'une base de gomme à mâcher, comprenant les étapes consistant :
a) à introduire de manière continue les ingrédients d'une base de gomme à mâcher, comprenant un élastomère dur, une charge et un ou plusieurs agents lubrifiants comprenant l'acétate de polyvinyle, dans un mélangeur continu comprenant un ou plusieurs orifices d'admission de charge d'alimentation et un ou plusieurs évents, l'acétate de polyvinyle étant introduit au niveau d'un ou plusieurs orifices d'admission de charge de PVAC ;
b) à chasser les substances volatiles de l'acide acétique du mélangeur au niveau d'un ou plusieurs évents en aval dudit ou desdits orifices d'admission de charge de PVAC, ledit ou lesdits évents ne servant d'orifices d'admission de charge d'alimentation pour aucun ingrédient de la base de gomme à mâcher qui absorbe de manière appréciable l'acide acétique ;
c) à soumettre les ingrédients de la base de gomme à mâcher à des opérations continues de mélange dans le mélangeur, en produisant ainsi une base de gomme à mâcher ; et
d) à décharger de manière continue la base de gomme à mâcher du mélangeur tandis que les ingrédients de la base de gomme à mâcher continuent d'être introduits et mélangés dans le mélangeur ;
dans lequel l'acétate de polyvinyle se dégrade pour libérer ledit acide acétique lorsqu'il est chauffé à 121-149°C (250-300°F).

2. Procédé suivant la revendication 1, dans lequel un ou plusieurs desdits orifices d'admission de charge d'alimentation comprennent un orifice ouvert dans ledit mélangeur, ledit orifice ouvert servant également d'évent.

3. Procédé suivant l'une quelconque des revendications précédentes, dans lequel le mélangeur continu comporte un cylindre ayant un diamètre intérieur moyen D et au moins un des évents à travers lequel les substances volatiles d'acétate de polyvinyle sont chassées est compris dans les limites de 4D du ou des orifices d'admission de charge de PVAC.

4. Procédé suivant l'une quelconque des revendications précédentes, dans lequel le mélangeur continu comprend une pièce de dispositif.

5. Procédé suivant l'une quelconque des revendications précédentes, dans lequel le mélangeur comprend un mélangeur à pales et à broches.

6. Procédé suivant l'une quelconque des revendications précédentes, dans lequel l'élastomère dur est mis en contact avec la charge avant un quelconque malaxage substantiel de l'élastomère dur.

7. Procédé suivant l'une quelconque des revendications précédentes, dans lequel les agents lubrifiants comprennent un solvant d'élastomère et le solvant d'élastomère est introduit dans le mélangeur continu à deux ou plus de deux desdits emplacements d'admission de charge d'alimentation spatialement séparés.

8. Procédé suivant l'une quelconque des revendications précédentes, dans lequel la base de gomme est déchargée du mélangeur en tant que partie d'une composition de gomme à mâcher.

9. Procédé suivant l'une quelconque des revendications précédentes, dans lequel l'élastomère dur est ajouté en totalité à un premier orifice d'admission de charge d'alimentation.

10. Procédé suivant la revendication 7, dans lequel l'acétate de polyvinyle est prémélangé à une partie du solvant d'élastomère et est introduit dans le mélangeur avec celle-ci.

11. Procédé suivant l'une quelconque des revendications précédentes, dans lequel au moins un desdits évents comprend un orifice connecté à une source de vide.

12. Procédé suivant l'une quelconque des revendications précédentes, dans lequel les agents lubrifiants sont choisis dans le groupe consistant en des solvants d'élastomères, des agents ramollissants, des élastomères mous, des polymères plastiques et leurs mélanges.

13. Procédé suivant la revendication 12, dans lequel les polymères plastiques comprennent l'acétate de polyvinyle.

14. Procédé suivant la revendication 12, dans lequel les solvants d'élastomères sont choisis dans le groupe consistant en des résines terpéniques, des esters de colophane naturels et leurs mélanges.

15. Procédé suivant la revendication 12, dans lequel les agents ramollissants sont choisis dans le groupe consistant en des graisses, des huiles, des cires, des émulsionnants et leurs mélanges.

16. Procédé suivant la revendication 12, dans lequel les élastomères durs ont un poids moléculaire Flory supérieur à 200 000 et les élastomères mous ont un poids moléculaire Flory inférieur à 100 000.

17. Procédé suivant la revendication 16, dans lequel les élastomères mous sont choisis dans le groupe consistant en le polyisobutylène, le polybutadiène et leurs mélanges.

18. Procédé suivant la revendication 16, dans lequel l'élastomère dur est choisi dans le groupe consistant en un copolymère isobutylène-isoprène, le caoutchouc styrène-butadiène, des caoutchoucs naturels, des gommes naturelles et leurs mélanges.

19. Procédé suivant l'une quelconque des revendications précédentes, dans lequel l'acétate de polyvinyle a un poids moléculaire compris dans l'intervalle de 15 000 à 80 000.

20. Procédé pour la préparation d'une composition de gomme à mâcher, dans lequel une base de gomme est préparée par le procédé suivant l'une quelconque des revendications précédentes et est mélangée à des agents aromatisants et des agents d'accroissement de volume pour produire ladite composition de gomme à mâcher.
